# EUROPÄISCHE PATENTSCHRIFT

(11) **EP 2 353 143 B1**
(45) Veröffentlichungstag und Bekanntmachung des Hinweises auf die Patenterteilung: **18.06.2014**
(21) Anmeldenummer: 09778669.3
(22) Anmeldetag: 23.09.2009
(51) Int. Cl.: G06T 7/00

(54) **VERFAHREN UND PRÜFSYSTEM ZUR OPTISCHEN PRÜFUNG EINES PRÜFOBJEKTS**
METHOD AND TEST SYSTEM FOR OPTICALLY TESTING A TEST OBJECT
PROCÉDÉ ET SYSTÈME DE CONTRÔLE POUR RÉALISER UN CONTRÔLE OPTIQUE D'UN OBJET

(30) Priorität: 01.10.2008 DE 102008049858
(43) Veröffentlichungstag der Anmeldung: 10.08.2011
(73) Patentinhaber: Panasonic Electric Works Europe AG, 83607 Holzkirchen (DE)
(72) Erfinder: ESSER, Andreas, 83043 Bad Aibling (DE); OSTERMAIER, Philipp, 85646 Anzing (DE)
(74) Vertreter: Beckord, Klaus
(86) Internationale Anmeldenummer: PCT/EP2009/006868
(87) Internationale Veröffentlichungsnummer: WO 2010/037492

(56) Entgegenhaltungen:
- WO-A-2008/077680
- US-A- 4 731 858
- US-A1- 2006 182 333
- US-A1- 2007 071 308
- US-B1- 6 718 074
- US-B2- 7 384 806

## Beschreibung

Die Erfindung betrifft ein Verfahren zur automatischen optischen Prüfung einer Kontur eines Prüfobjekts, indem zunächst ein Prüfbild zumindest von einem gewünschten Prüfbereich eines zu prüfenden Prüfobjekts erfasst wird, innerhalb des Prüfbilds eine Prüfstrecke entlang der zu prüfenden Kontur festgelegt wird und dann für entlang der Prüfstrecke definierte Prüfzellen, welche jeweils eine Anzahl von Bildpunkten umfassen, Prüfparameterwerte ermittelt werden. Auf Basis der Prüfparameterwerte der Prüfzellen werden schließlich Abweichungen von vorgegebenen Referenzwerten detektiert, um so die gewünschte Prüfung durchzuführen. Die Erfindung betrifft des Weiteren ein Prüfsystem zur Durchführung eines solchen Verfahrens.

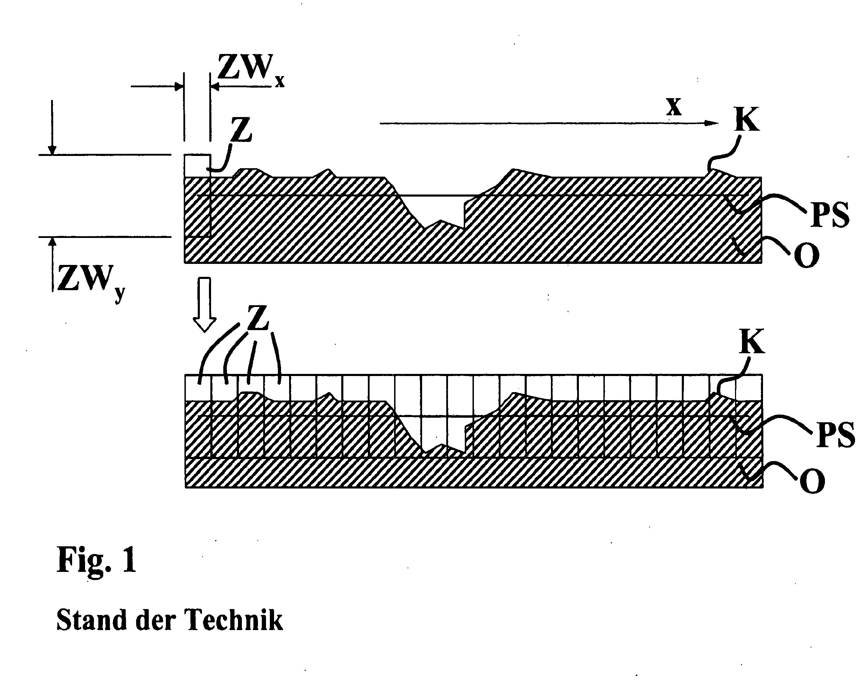

Mit zunehmender Automatisierung von Produktionsprozessen werden zur Prüfung der Zwischen- und/oder Endprodukte anstelle von visuellen Kontrollen durch Prüfpersonal mehr und mehr automatische optische Prüfverfahren eingesetzt. Hierzu ist in der Praxis bereits seit langem das eingangs genannte Verfahren bekannt, bei dem zunächst mit einer Kamera Prüfbilder der jeweils zu kontrollierenden Prüfobjekte gefertigt werden und dann entlang von festgelegten Prüfstrecken mit Hilfe von automatischen Bildverarbeitungsverfahren eine Prüfung erfolgt. Eine Prüfung eines Objekts entlang einer Prüfstrecke wird zunächst schematisch anhand der beiliegenden Figur 1 verdeutlicht. In Figur 1 ist als Beispiel ein Teil eines Objekts O gezeigt, dessen Außenkante eine bestimmte zu prüfende Kontur K aufweist. Eine solche Konturprüfung ist eine übliche Aufgabe im Rahmen der automatischen optischen Objektprüfung. Beispielsweise werden so innere oder äußere Begrenzungsränder des Prüfobjekts bzw. von Teilen des Prüfobjekts oder Grenzlinien zwischen bestimmten Komponenten oder Bestandteilen des Prüfobjekts auf Fehler untersucht. Ein typisches Beispiel hierfür ist die Kontrolle des dichten Abschlusses einer Vergussmasse in einer Gehäuseöffnung, beispielsweise in einem Relais oder einem anderen elektrischen oder elektronischen Baustein.

Ein Verfahren zur optischen Prüfung einer kompletten Oberfläche wird beispielsweise in der WO 2008/077680 A1 beschrieben. Hier wird jedoch nicht eine Prüfung entlang einer Prüfstrecke durchgeführt, sondern stattdessen virtuell ein Gitternetz über das Bild mit dem Prüfling gelegt und das komplette Bild so in eine Vielzahl kleinerer Bildbereiche unterteilt, die eine Fläche lückenlos abdecken, ohne sich dabei zu überlappen. Für jeden dieser Bildbereiche wird nach einem Prüfkriterium jeweils mindestens ein Referenz- sowie ein Prüfwert ermittelt, die zur Ermittlung von Abweichungen miteinander verglichen werden. Um Referenzwerte und Prüfwerte vergleichen zu können, ist es erforderlich, dass die Bildbereiche im Referenzbild und im Prüfbild an der gleichen Stelle bezüglich der Objektoberfläche liegen. Daher wird das Gitternetz jeweils an Bezugspunkten, Bezugszeichen oder Bezugslinien, beispielsweise einer Mittellinie bzw. mehreren senkrecht zueinander stehenden Mittellinien des jeweiligen Objekts im Bild ausgerichtet. Im Gegensatz dazu muss bei dem vorliegenden Verfahren, bei dem die Prüfung entlang einer Prüfstrecke erfolgen soll, dann entsprechend eine Prüfstrecke über die zu prüfenden Bereiche gelegt werden, so dass letztlich der gesamte zu prüfende Bereich durch entlang der Prüfstrecke gesetzte Prüfzellen abgedeckt wird.

Die Kontur K des Prüfobjekts O weist ungefähr in der Mitte des in Figur 1 dargestellten Konturabschnitts einen Fehler in Form einer Ausnehmung auf. Die Prüfung entlang der festgelegten Prüfstrecke PS erfolgt dabei mit Hilfe von rechteckigen Prüfzellen Z, welche üblicherweise mehrere Bildpunkte bzw. Pixel umfassen. Hierzu wird während eines "Abscannens" der Kontur K entlang der Prüfstrecke PS, hier in einer Scanrichtung x, eine Prüfzellenstruktur mit einer Reihe solcher Prüfzellen Z gesetzt. Der Bediener kann vorab nicht nur die Prüfstrecke PS selbst, sondern noch einige weitere Parameter für die Prüfung vorgeben, wie beispielsweise die Zellenbreite ZW_{X} der Zellen Z in der Scanrichtung x oder die Höhe ZW_{Y} der Prüfzellen Z senkrecht zur Scanrichtung x. Ebenso ist es möglich, die Anzahl der Prüfzellen Z auf der Prüfstrecke PS (welche eine bestimmte Länge aufweist) und/oder deren Dichte festlegen. Je nach Vorgaben der Zellenbreite ZW_{X} in x-Richtung bzw. der Zellendichte grenzen dann benachbarte Prüfungszellen Z, wie dies im unteren Teil der Figur dargestellt ist, aneinander oder überlappen sich. Die automatische Fehlererkennung erfolgt schließlich durch Ermittlung und Auswertung eines mittleren Grauwerts der einzelnen Zellen Z, d. h. eines über alle Pixel innerhalb einer Zelle gebildeten mittleren Intensitätswerts. Bei der Überprüfung können dann beispielsweise die mittleren Intensitätswerte mehrerer benachbarter Zellen auf Abweichungen untersucht und anhand dieser Abweichungen kann ein Fehler erkannt werden.

Es ist klar, dass für die Genauigkeit der Prüfung die Einstellungen der verschiedenen Parameter wie Zellenweite und -höhe, Dichte der Zellen etc. mitbestimmend sind. So sollte beispielsweise die Breite und Höhe der Prüfzellen Z vorzugsweise halb so groß eingestellt werden wie ein zu erwartender Fehler, der detektiert werden sollte. Ein weiterer wesentlicher Einstellparameter ist die Auswahl der Prüfstrecke PS. Neben geraden Prüfstrecken, wie sie in Figur 1 dargestellt sind, gibt es auch die Möglichkeit, gebogene Prüfstrecken festzulegen, um so z. B. kreisförmige Konturen zu überprüfen.

Bei einer Vielzahl von Prüfobjekten arbeitet dieses Verfahren sehr gut und schnell. Jedoch steigt der Rechenaufwand und/oder Speicheraufwand erheblich an, wenn Prüfstrecken festgelegt werden müssen, die z. B. viele Bögen aufweisen. Dies liegt daran, dass für die rechteckigen Prüfzellen die kompletten Koordinaten aller Eckpunkte, d. h. nicht nur die Position der Prüfzelle, sondern auch deren Orientierung, aufwändig berechnet und/oder gespeichert werden müssen. Dies ist insofern wichtig, da meist durch entsprechende Prüfung eines Referenz-Prüfobjekts zuvor Referenz-Prüfparameterwerte, die zum Vergleich mit den in der jeweiligen Prüfung des aktuellen Prüfobjekts gewonnenen Prüfparameterwerten herangezogen werden, oder andere Vergleichswerte, z B. ein Schwellenwert, festgelegt werden. Daher sollten die Prüfzellen entlang der Prüfstrecke bei einer Prüfung gemäß einem genauen Algorithmus exakt gesetzt werden oder es müssen sämtliche Koordinaten aller Zellen in geeigneter Weise hinterlegt werden, um die Position, die Größe und die exakte Orientierung der Prüfzellen zu definieren.

Ein weiteres Prüfverfahren, welches mit rechteckigen Pixelgruppen, z. B. von 3 x 3 Pixeln, arbeitet, wird in der US 2007/0071308 A1 beschrieben.

Es ist eine Aufgabe der vorliegenden Erfindung, das eingangs genannte Prüfverfahren und ein entsprechendes Prüfsystem dahingehend zu verbessern, dass es insbesondere bei nicht gerade verlaufenden Prüfstrecken einen geringeren Rechenleistungs- und/oder Speicherbedarf hat.

Diese Aufgabe wird durch ein Verfahren gemäß Patentanspruch 1 und durch ein Prüfsystem gemäß Patentanspruch 10 gelöst.

Bei dem erfindungsgemäßen Verfahren wird dafür gesorgt, dass die Prüfzellen jeweils so ausgebildet sind, dass sie im Wesentlichen, d. h. soweit dies im Rahmen der Bildauflösung aufgrund der einzelnen Pixel des Bildes möglich ist, eine Kreisform oder zumindest einen Kreis annähernde konvexe Polygonform mit mindestens fünf Ecken aufweisen. Eine solche einen Kreis annähernde konvexe Polygonform mit mindestens fünf Ecken wird im Folgenden auch als "quasi-kreisförmig" bezeichnet. Dabei handelt es sich besonders bevorzugt um regelmäßige Polygone, wie z. B. regelmäßige Fünfecke, Hexagone, Heptagone, Oktogone etc. D. h. die Prüfzellen weisen besonders bevorzugt mindestens sechs, weiter bevorzugt mindestens sieben oder sogar acht Ecken auf, um sich möglichst gut einer Kreissymmetrie zu nähern. Bei solchen kreisförmigen bzw. "quasi-kreisförmigen" Prüfzellen ist der Prüfzellendurchmesser in mehreren quer zueinander stehenden Richtungen gleich oder zumindest in etwa gleich. Damit ist bei einer Prüfung die Orientierung der Prüfzelle nicht mehr so wichtig, wobei der Einfluss der Orientierung auf das Prüfergebnis immer mehr zurücktritt, je stärker die Kreisform angenähert ist. Dies hat den Vorteil, dass für solche Prüfzellen nicht mehr die kompletten Koordinaten, d. h. die Position und die Orientierung, definiert werden müssen, sondern dass es ausreicht, wenn die Prüfzelle die richtige Position und Größe hat. Daher müssen für diese Prüfzellen lediglich noch der Mittelpunkt und der Radius definiert werden, wobei bei den quasi-kreisförmigen Prüfzellen in Form von Polygonen beispielsweise einfach der Radius vom Mittelpunkt bis zu einer Ecke des Polygons verwendet werden kann. Der Rechenaufwand und/oder Speicheraufwand zur Festlegung der Prüfzellen ist daher erheblich geringer als bei rechteckigen Prüfzellen.

Es hat sich zudem überraschenderweise herausgestellt, dass mit kreisförmigen bzw. quasi-kreisförmigen Zellen eine signifikant bessere Fehlererkennung als mit rechteckigen Prüfzellen erreicht wird. Zwar ist bei Fehlern, die selber eine im Wesentlichen rechteckige Form aufweisen, die Erkennung mit Hilfe von rechteckigen Prüfzellen minimal besser, was aber nicht signifikant gegenüber dem neuen Prüfverfahren mit kreisförmigen bzw. quasi-kreisförmigen Prüfzellen auffällt. Jedoch ist bei eher abgerundeten Fehlern die Fehlererkennung mit kreisförmigen bzw. quasi-kreisförmigen Zellen erheblich besser. Dabei ist es auch hier so, dass die Fehlererkennung besser wird, je stärker die Zellenform an eine echte Kreisform angenähert ist, so dass dementsprechend eine möglichst weitgehende Kreisform bevorzugt ist.

Ein geeignetes Prüfsystem für eine solche automatische Prüfung benötigt wie üblich eine Bildsensoreinheit, beispielsweise eine Kamera, insbesondere CCD-Kamera, zur Erfassung eines Prüfbilds, welches zumindest einen Prüfbereich eines Prüfobjekts zeigt. Darüber hinaus benötigt das Prüfsystem eine Prüfstreckenermittlungseinheit zum Ermitteln einer Prüfstrecke entlang der zu prüfenden Kontur innerhalb des Prüfbilds. Weiterhin wird eine Prüfzellenermittlungseinheit zur Definition von jeweils einer Anzahl von Bildpunkten umfassenden Prüfzellen entlang der Prüfstrecke und zum Ermitteln von Prüfparameterwerten für die einzelnen Prüfzellen benötigt sowie eine Prüfeinheit zum Detektieren von Abweichungen von vorgegebenen Referenzwerten auf Basis der Prüfparameterwerte der Prüfzellen sowie eine Ausgabeeinheit zur Ausgabe eines Prüfergebnisses. Dabei ist die Prüfzellenermittlungseinheit erfindungsgemäß so ausgebildet, dass die von ihr definierten Prüfzellen jeweils im Wesentlichen eine Kreisform oder eine einer Kreisform annähernden konvexen Polygonform mit mindestens fünf Ecken aufweisen.

Die Prüfstreckenermittlungseinheit, die Prüfzellenermittlungseinheit und die Prüfeinheit können vorzugsweise zumindest zum Teil in Form von geeigneter Software realisiert sein. Dies ermöglicht eine einfache Nachrüstung bereits bestehender Prüfsysteme, welche bereits geeignete Bildsensoreinheiten und Speichereinheiten enthalten. Die Softwaremodule können beispielsweise auf einer geeigneten Rechnereinheit eines Prüfsystems implementiert sein, welche auch die benötigten Ansteuerungskomponenten für die Hardwarekomponenten, beispielsweise einen "Frame-Grabber" zum Auslesen der Bildsensoreinheit und zur Erstellung der benötigten Bilder, sowie weitere Schnittstellen zur Bedienung des gesamten Prüfsystems und zur zusätzlichen Kontrolle der Prüfaufnahmen durch einen Bediener enthält. Die Erfindung wird daher auch durch ein Computerprogrammprodukt gelöst, welches direkt in einen Speicher einer programmierbaren Rechnereinheit eines Prüfsystems ladbar ist, mit Programmcodemitteln, um alle Schritte des erfindungsgemäßen Verfahrens auszuführen, wenn das Programm auf der Rechnereinheit ausgeführt wird.

Bei der Ausgabeeinheit kann es sich beispielsweise um eine Anzeigeeinheit zur optischen und/oder akustischen Anzeige handeln, welche ein Signal ausgibt, wenn ein fehlerhaftes Prüfobjekt detektiert wurde, oder um eine Steuersignalausgabeeinheit zur Ausgabe eines Steuersignals, welches dann in einer Anlage, in der die Prüfobjekte entlang des Prüfsystems transportiert werden, eine Sortiereinrichtung oder dergleichen ansteuert, so dass fehlerhafte Objekte automatisch aussortiert werden.

Weitere besonders vorteilhafte Ausgestaltungen und Weiterbildungen der Erfindung ergeben sich insbesondere aus den abhängigen Ansprüchen sowie der nachfolgenden Beschreibung. Dabei kann das erfindungsgemäße Prüfsystem auch entsprechend den abhängigen Verfahrensansprüchen weitergebildet sein.

Die Prüfparameterwerte für die einzelnen Prüfzellen werden jeweils basierend auf Bildpunktwerten der von den Prüfzellen umfassten Bildpunkte ermittelt. Dabei können die Prüfparameterwerte vorzugsweise auf Basis der Intensitätsmittelwerte der Intensitätswerte der einzelnen Pixel der jeweiligen Prüfzelle ermittelt werden, wobei die Prüfparameter selber die Intensitätsmittelwerte darstellen oder aus den Intensitätsmittelwerten verschiedener, beispielsweise benachbarter oder sich überlappender Prüfzellen abgeleitet sein können. Außer Intensitätswerten können aber in identischer Weise auch andere Bildpunktwerte wie z. B. Farbwerte, Farbdifferenzwerte, Farbanteile etc. zur Bildung der Prüfparameter gewählt werden. Auf welche Weise die Prüfparameterwerte für die Prüfzellen ermittelt werden, hängt letztlich von der jeweiligen Prüfaufgabe ab, z. B. ob wie oben beschrieben eine Kontur geprüft werden soll, oder ob beispielsweise Farbschwankungen in einer Fläche untersucht werden sollen etc..

Bei einer erfindungsgemäßen Prüfung mehrerer gleichartiger Prüfobjekte wird vorzugsweise zunächst in einem Referenzbild eine Referenz-Prüfstrecke ermittelt, auf deren Basis dann eine Ermittlung einer Prüfstrecke oder zumindest von Teilen der Prüfstrecke innerhalb des Prüfbilds erfolgt. Das Definieren der Referenz-Prüfstrecke im Referenz-Prüfbild kann beispielsweise manuell durch einen Benutzer mit Hilfe einer grafischen Benutzeroberfläche erfolgen. Grundsätzlich ist aber auch ein automatisches Setzen einer Prüfstrecke möglich. Diese Referenz-Prüfstrecke braucht dann nur noch auf das jeweilige aktuelle Prüfbild übertragen und angepasst zu werden. Dabei ist es insbesondere auch möglich, dass im Referenz-Prüfbild auch gleich Lage und Größe der Prüfzellen definiert werden und diese Prüfzellen, oder eine aus mehreren Prüfzellen bestehende Prüfzellenstruktur ganz oder zum Teil, ebenfalls auf das aktuelle Prüfbild zu übertragen und anzupassen.

Eine solche Anpassung kann dabei vorzugsweise mit Hilfe von in der Prüfaufnahme des aktuell zu prüfenden Prüfobjekts eindeutig identifizierbaren Referenzmerkmalen erfolgen. Hierbei kann es sich um gesetzte Marker, aber auch um signifikante, eindeutig erkennbare Strukturen des Objekts selbst, wie Ecken, Kanten etc. handeln, vorzugsweise aber um solche Strukturen, die keiner Prüfung bedürfen. Aus den Referenzmerkmalen können beispielsweise Referenzpunkte berechnet werden, deren Position am zu prüfenden Objekt exakt definiert ist. Es ist lediglich erforderlich, dass dem Referenz-Prüfobjekt ebenfalls die entsprechenden Referenzmerkmale bzw. Informationen über deren Lage und Orientierung, Größe und/oder Form zugeordnet sind.

Durch eine Erkennung der Referenzmerkmale im Referenz-Prüfbild und in dem aktuellen Prüfbild und eine Berechnung der Unterschiede zwischen den absoluten und relativen Lagen, Orientierungen, Größen und/oder Formen der Referenzmerkmale bzw. Positionen der Referenzpunkte lassen sich automatisch geeignete Transformationsregeln ermitteln, um die Referenz-Prüfstrecke bzw. die Referenz-Prüfzellenstrukturen durch eine entsprechende Skalierung, Verschiebung und/oder Orientierungsänderung an den aktuellen Prüfvorgang anzupassen.

Ein hierfür geeignetes Prüfsystem benötigt eine Speichereinheit, in der die Referenz-Prüfstrecken und/oder Referenz-Prüfzellen hinterlegt werden können. Als Speichereinheit des Prüfsystems ist dabei jede geeignete Speichereinheit anzusehen, auf die das Prüfsystem Zugriff hat.

Ein solches Prüfsystem weist vorzugsweise zudem eine Prüfstreckenermittlungseinheit auf, welche so ausgebildet ist, dass sie auf Basis einer Referenz-Prüfstrecke eine Prüfstrecke für eine zu prüfende Kontur innerhalb des Prüfbilds ermitteln kann, beispielsweise durch die besagte Anpassung der Referenz-Prüfstrecke, sowie ggf. eine Prüfzellenermittlungseinheit, welche so ausgebildet ist, dass sie auf Basis einer entlang einer Referenz-Prüfstrecke definierten Referenz-Prüfzellenstruktur eine Prüfzellenstruktur entlang der Prüfstrecke festlegt bzw. anpasst. Die Prüfzellenermittlungseinheit kann auch so ausgebildet sein, dass sie sowohl Referenz-Prüfzellenstrukturen übernehmen als auch selbständig Prüfzellenstrukturen definieren kann.

Wie bereits oben erwähnt, sollte die Form der Prüfzellen vorzugsweise soweit wie möglich einer Kreisform angenähert sein, da dadurch die Qualität der Prüfung verbessert werden kann. Um dies zu erreichen, wird bei einer bevorzugten Variante das Referenz-Prüfbild oder das Prüfbild, in dem die Prüfzellenstruktur definiert werden soll, zunächst vergrößert. Beispielsweise wird bei einer Vergrößerung um einen Faktor n jeder Pixel durch ein Feld von n x n Pixel ersetzt, wobei im einfachsten Fall die Pixel den gleichen Bildpunktwert enthalten wie der ursprüngliche Pixel. Ebenso ist natürlich ein Interpolationsverfahren möglich. In diesem vergrößerten Bild wird dann die Prüfzelle gesetzt. Somit ist eine Definition der Prüfzelle im Subpixelbereich möglich und es kann die Genauigkeit des gesamten Prüfverfahrens verbessert werden.

Die Anwendung der Erfindung ist, wie eingangs erläutert, die Prüfung einer Kontur eines Prüfobjekts. Dementsprechend verläuft die Prüfstrecke entlang der zu prüfenden Kontur, wobei die Prüfstrecke so gewählt werden sollte, dass die Prüfzellen die Kontur in geeigneter Weise abdecken. Daher sollte die Prüfstrecke möglichst an die gewünschte fehlerfreie Kontur des Prüfobjekts angepasst sein und dem richtigen Verlauf folgen. Insbesondere bei solchen Konturprüfungen kann die Prüfstrecke natürlich auch aus einer Vielzahl von einzelnen Prüfstreckenabschnitten bestehen, beispielsweise bei einer Prüfung der Außenkonturen eines rechteckigen Objekts aus vier Prüfstreckenabschnitten, die entlang der vier Kanten verlaufen.

Vorzugsweise wird eine an einem Ende eines Prüfstreckenabschnitts bzw. am Ende einer Prüfstrecke liegende Prüfzelle so definiert, dass das betreffende Ende des Prüfstreckenabschnitts bzw. der gesamten Prüfstrecke genau auf einem Rand der Prüfzelle liegt. Dies gilt insbesondere auch bei den automatisch gesetzten Prüfzellenstrukturen. Wie aus Figur 1 deutlich wird, wurden bei dem bisherigen Verfahren die Prüfzellen immer so gesetzt, dass ihr Mittelpunkt am Ende der Prüfstrecke liegt. Dies führt dazu, dass das Ende der Prüfstrecke vom Bediener möglichst genau so gelegt werden muss, dass es ein Stück vor dem Ende der zu prüfenden Kontur endet, so dass die Prüfzelle in der Scan-Richtung nicht über den Rand der zu prüfenden Kontur hinausragt, da dies zu Fehlern führen würde. Wird bei einer automatischen Definition einer Prüfzellenstruktur dafür gesorgt, dass der Rand der äußersten Prüfzelle direkt auf dem Ende des jeweiligen Prüfstreckenabschnitts liegt, so kann auch der jeweilige Prüfstreckenabschnitt direkt bis an den Rand der Kontur bzw. den Rand des Objekts herangeführt werden oder automatisch eine entsprechende Prüfstrecke erzeugt werden, die bis zum Rand geht. Dies erleichtert das korrekte Setzen der Prüfstrecke erheblich.

Bei einer besonders bevorzugten Weiterbildung der Erfindung, wird die Prüfstrecke so definiert, dass sie eine Anzahl von Prüfstreckenbereichen umfasst, die jeweils in definierte Prüfstreckenbereichsklassen gemäß vorgegebenen Klassifizierungsregeln klassifiziert sind. Das heißt, dass bestimmte Prüfstreckenbereiche in bestimmte Prüfstreckenbereichsklassen nach bestimmten Charakteristika einsortiert sind. Mögliche Klassifizierungsregeln werden nachfolgend noch näher erläutert. Es wird aber bereits jetzt darauf hingewiesen, dass die Prüfstreckenbereiche auch so definiert sein können, dass sie sich entlang der Prüfstrecke überlappen, d. h. dass Teile der Prüfstrecke zu verschiedenen Prüfstreckenbereichen gehören können.

Es erfolgt dann jeweils entlang der verschiedenen Prüfstreckenbereiche der Prüfstrecke die Definition der jeweiligen Prüfzellenstruktur sowie eine Ermittlung von Prüfparameterwerten für die einzelnen Prüfzellen gemäß für die jeweilige Prüfstreckenbereichsklasse vorgegebenen Prüfregeln. Schließlich erfolgt auch die Prüfung des Prüfobjekts entlang der einzelnen Prüfstreckenabschnitte auf Basis der Prüfparameterwerte der Prüfzellen gemäß für die jeweilige Prüfstreckenbereichsklasse vorgegebenen Prüfregeln. Beispielsweise können auf Basis der Prüfparameterwerte wieder bestimmte Abweichungen von vorgegebenen Referenzwerten detektiert werden, wobei diese Referenzwerte absolut vorgegeben sein können und/oder an Referenzobjekten ermittelt wurden.

Die Prüfregeln können dabei für jede Prüfstreckenbereichsklasse unterschiedlich sein. Es können aber auch für mehrere Prüfstreckenbereichsklassen, beispielsweise für alle an einer bestimmten Kontur benötigten Prüfstreckenbereichsklassen, die gleichen Prüfregeln verwendet werden. Die genannten Prüfregeln können dabei wie oben erwähnt sowohl Regeln zur Definition der Prüfzellenstrukturen als auch Regeln zur Ermittlung von Prüfparameterwerten für die einzelnen Prüfzellen sowie Methoden zum Prüfen der Kontur auf Basis dieser Prüfparameterwerte umfassen.

Ein wesentlicher Vorteil des so weitergebildeten Verfahrens besteht darin, dass einzelne Prüfstreckenbereiche der Prüfstrecke separat nach unterschiedlichen Prüfregeln geprüft werden können und insbesondere auch eine individuelle Festlegung von Prüfzellenstrukturen nach den jeweils für die Prüfstreckenbereichsklasse vorgegebenen Prüfregeln erfolgen kann. Dies erlaubt eine individuelle Behandlung bestimmter Abschnitte entlang der Prüfstrecke, so dass es insbesondere möglich ist, beispielsweise einfache gerade oder leicht gebogene Streckenabschnitte gemäß dem bisher bekannten Verfahren schnell und sicher zu prüfen und an den kritischen Stellen, z. B. scharfen Ecken und Kanten etc. in der Prüfstrecke, auf andere zuvor festgelegte Prüfregeln zurückzugreifen, um diese innerhalb des Verfahrens automatisch zu überprüfen. Dabei kann durch eine geschickte Wahl der Prüfregeln für den jeweiligen Typ der kritischen Prüfstreckenabschnitte, d. h. die jeweilige Prüfstreckenbereichsklasse, dafür gesorgt werden, dass an jedem Prüfstreckenabschnitt eine sichere Prüfung erfolgt. Auch bei schwierigen Prüfobjekten ist z. B. so eine vollautomatische genaue Prüfung, insbesondere von komplizierten Konturen, mit allenfalls geringen Falschmeldungen möglich.

Auch bei diesem weiterentwickelten Verfahren kann vorzugsweise zunächst in einem Referenzbild eine geeignete Referenz-Prüfstrecke ermittelt und analysiert werden. Bei dieser bevorzugten automatischen Analyse werden Prüfstreckenbereiche der Referenz-Prüfstrecke gemäß den vorgegebenen Klassifizierungsregeln in definierte Prüfstreckenbereichsklassen klassifiziert. Eine solche Analyse kann vorzugsweise automatisch erfolgen. Ein Verfahren hierfür wird nachfolgend noch näher erläutert.

Ein für eine solche automatische Prüfstreckenklassifizierung geeignetes Prüfsystem benötigt eine Speichereinheit, in welcher für verschiedene Prüfstreckenbereichsklassen Klassifizierungsregeln hinterlegt sind, sowie eine Prüfstreckenklassifizierungseinheit, um eine Prüfstrecke zu analysieren und dabei Prüfstreckenbereiche der Prüfstrecke gemäß vorgegebener Klassifizierungsregeln in definierte Prüfstreckenbereichsklassen zu klassifizieren.

Sofern im Referenz-Prüfbild bereits Prüfstellenstrukturen definiert werden, werden besonders bevorzugt auf Basis von Prüfparameterwerten von Prüfzellen der Referenz-Prüfstellenstruktur auch schon Referenzwerte für eine spätere Prüfung von Prüfobjekten ermittelt. Diese Referenzwerte können beispielsweise dann auch genutzt werden, um individuelle Prüfregeln für bestimmte kritische Prüfstreckenbereiche festzulegen.

Auch bei der Definition der Prüfstrecken bzw. Prüfzellen ist eine unterschiedliche Behandlung unterschiedlicher Prüfstreckenbereiche bzw. Prüfstreckenbereichsklassen möglich. Beispielsweise können für einige Prüfstreckenbereiche lediglich die Referenz-Prüfstreckenbereiche aus einem Referenz-Prüfbild übernommen werden, und es erfolgt dann eine individuelle automatische Festlegung der Prüfzellenstruktur anhand des so jeweils festgelegten Prüfstreckenbereichs für jedes einzelne Prüfobjekt. Dies bietet sich z. B. bei den auch in den bisherigen Verfahren schon automatisch festgelegten Prüfzellenstrukturen entlang von Geraden oder nur leicht gebogenen Abschnitten an. Für andere Prüfstreckenbereiche kann dagegen eine im Referenz-Prüfbild festgelegte Referenz-Prüfzellenstruktur komplett übernommen und an die jeweiligen Prüfstreckenbereiche, beispielsweise bei einer Konturprüfung einen Konturabschnitt, des aktuellen Prüfbilds angepasst werden.

Bei einem Einsatz des Prüfverfahrens bzw. des Prüfsystems zur Konturprüfung ist es wie oben erwähnt erforderlich, eine an die zu prüfende Kontur angepasste Prüfstrecke zu ermitteln. Ein Anpassen der Prüfstrecke an die Kontur ist dabei so zu verstehen, dass die Prüfstrecke in geeigneter Weise entlang der gewünschten Kontur verläuft, um die Prüfung mit Hilfe der Prüfzellen durchführen zu können. D. h. die Prüflinie muss hierzu nicht entlang der exakten Feinstruktur der Kontur verlaufen, sondern es reicht in der Regel, wenn sie dem groben Verlauf der Kontur eines fehlerlosen Objekts folgt, wie z. B. die in Figur 1 gezeigte gerade Prüflinie zum Prüfen einer im Gesamtverlauf (makroskopisch betrachtet) geraden Objektkante.

Bei einem besonders bevorzugten Verfahren zur automatischen Ermittlung einer Prüfstrecke oder Referenz-Prüfstrecke für eine Konturprüfung wird zunächst eine Kontur eines Prüfobjekts oder Referenz-Prüfobjekts aus dem Prüfbild oder Referenz-Prüfbild extrahiert. Dies kann mit üblichen Kantenextraktionsverfahren, z. B. einem Schwellenwertverfahren, Kantenverfolgungsverfahren, Gradientenbild-Auswertungsverfahren geschehen, je nachdem, um was für ein Prüfobjekt es sich handelt bzw. welche Bedingungen, insbesondere Beleuchtungsbedingungen, vorliegen. Diese Kontur wird dann in Konturabschnitte mit bestimmten charakteristischen Merkmalen, beispielsweise in Geraden, Kreisbogensegmente etc., aufgebrochen.

Zum Aufbrechen der Kontur in Konturabschnitte mit bestimmten charakteristischen Merkmalen gibt es verschiedene Möglichkeiten. Vorzugsweise wird die Kontur zunächst mit einem Polygonapproximations-Verfahren durch einen Polygonzug angenähert. In einem weiteren Approximationsschritt werden dann Einzelpolygonabschnitte des Polygonzugs zur Bildung von Prüfstreckenabschnitten jeweils an einen dem betreffenden Polygonabschnitt zugeordneten Abschnitt der Kontur approximiert. Dabei müssen diese Prüfstreckenabschnitte nicht unbedingt identisch mit den späteren Prüfstreckenbereichen sein. So ist es durchaus möglich, dass ein Prüfstreckenbereich genau einem Prüfstreckenabschnitt entspricht. Es ist aber auch möglich, dass ein Prüfstreckenbereich nur einen Teil eines solchen Prüfstreckenabschnitts bildet oder mehrere solcher Prüfstreckenabschnitte bzw. Teile von solchen Prüfstreckenabschnitten umfasst, beispielsweise ein Prüfstreckenbereich den Übergang zwischen zwei Prüfstreckenabschnitten umfasst. Bei einem Aufbrechen der Kontur können beispielsweise auch benachbarte Prüfstreckenabschnitte entstehen, deren zueinander gewandte Enden nicht exakt aufeinander treffen, d. h. dass ein Sprung in der Prüfstrecke vorliegt. Auch diese Bereiche zählen dann zu den von der Prüfstrecke umfassten Prüfstreckenbereichen bzw. können Teile solcher Prüfstreckenbereiche sein.

Die Erfindung wird im Folgenden unter Hinweis auf die beigefügten Figuren anhand von Ausführungsbeispielen noch einmal erläutert, woraus sich die Einzelheiten und Vorteile der Erfindung ergeben. Es zeigen im Einzelnen:
- Figur 1: eine schematische Darstellung zur Erläuterung eines Kontur-Prüfverfahrens gemäß dem Stand der Technik,
- Figur 2: ein Flussdiagramm zur Erläuterung eines möglichen Ablaufs einer besonders bevorzugten Variante des erfindungsgemäßen Prüfverfahrens,
- Figur 3: eine schematische Darstellung eines Teils eines Prüfobjekts mit einer an der Kante extrahierten Kontur,
- Figur 4: die extrahierte Kontur gemäß Figur 3 nach einem Aufbrechen in Konturabschnitte,
- Figur 5: eine schematische Darstellung zur Erläuterung einer Prüfung einer Kontur gemäß dem erfindungsgemäßen Verfahren entlang einem Prüfstreckenbereich, welcher in eine erste Prüfstreckenbereichsklasse fällt,
- Figur 6: eine schematische Darstellung eines Konturabschnitts und eines daran angepassten Prüfstreckenbereichs, welcher in eine zweite Prüfstreckenbereichsklasse fällt, sowie eine hierfür definierte Prüfzellenstruktur,
- Figur 7: eine schematische Darstellung eines Konturabschnitts und eines daran angepassten Prüfstreckenbereichs, welcher in eine dritte Prüfstreckenbereichsklasse fällt, sowie eine hierfür definierte Prüfzellenstruktur,
- Figur 8: eine schematische Darstellung eines Konturabschnitts und eines daran angepassten Prüfstreckenbereichs, welcher in eine vierte Prüfstreckenbereichsklasse fällt, sowie eine hierfür definierte Prüfzellenstruktur,
- Figur 9a: eine schematische Darstellung eines Konturabschnitts und eines daran angepassten Prüfstreckenbereichs, welcher in eine fünfte Prüfstreckenbereichsklasse fällt, sowie eine hierfür definierte Prüfzellenstruktur,
- Figur 9b: eine schematische Darstellung einer weiteren Prüfzellenstruktur für einen Prüfstreckenbereich, welcher in eine fünfte Prüfstreckenbereichsklasse fällt,
- Figur 9c: eine schematische Darstellung einer weiteren Prüfzellenstruktur für einen Prüfstreckenbereich, welcher in eine fünfte Prüfstreckenbereichsklasse fällt,
- Figur 10a: ein Teil eines Prüfobjekts mit einer Kante mit spitzwinkliger Kontur und einer über den durch die Spitze gebildeten kritischen Prüfstreckenbereich gelegten Prüfzellenstruktur,
- Figur 10b: das Prüfobjektteil gemäß Figur 10a, jedoch mit entlang den geraden Seitenkanten verlaufenden Prüfstreckenbereichen und Prüfzellenstrukturen,
- Figur 10c: das Prüfobjektteil gemäß den Figuren 10a und 10b, wobei die Prüfzellenstrukturen gemäß den Figuren 10a und 10b überlagert sind,
- Figur 11: eine Darstellung eines vergrößerten Ausschnitts eines Prüfobjekts mit einer darin definierten Prüfzelle,
- Figur 12: ein vereinfachtes Blockschaltbild eines erfindungsgemäßen Prüfsystems mit einem grob schematisch dargestellten Prüfobjekt.

Anhand von Figur 1 wurde bereits eingangs ein aus der Praxis bekanntes Verfahren zur Prüfung von Konturen beschrieben, welches ebenfalls mit einer Anordnung von Prüfzellen Z entlang einer Prüfstrecke PS arbeitet, wobei jedoch rechteckige Prüfzellen Z eingesetzt werden und so eine automatische Prüfung entlang gerader oder nicht zu stark gekrümmter Prüfstrecken möglich ist. Bei dem nachfolgend beschriebenen Ausführungsbeispiel der Erfindung wird dagegen zum einen mit besonders vorteilhaften kreisförmigen (bzw. fast kreisförmigen) Prüfzellen PZ gearbeitet und zum anderen ein besonders bevorzugtes Verfahren eingesetzt, um auf einfache Weise auch kompliziertere Prüfstreckenbereiche wie Ecken oder Kanten automatisch sicher zu prüfen..

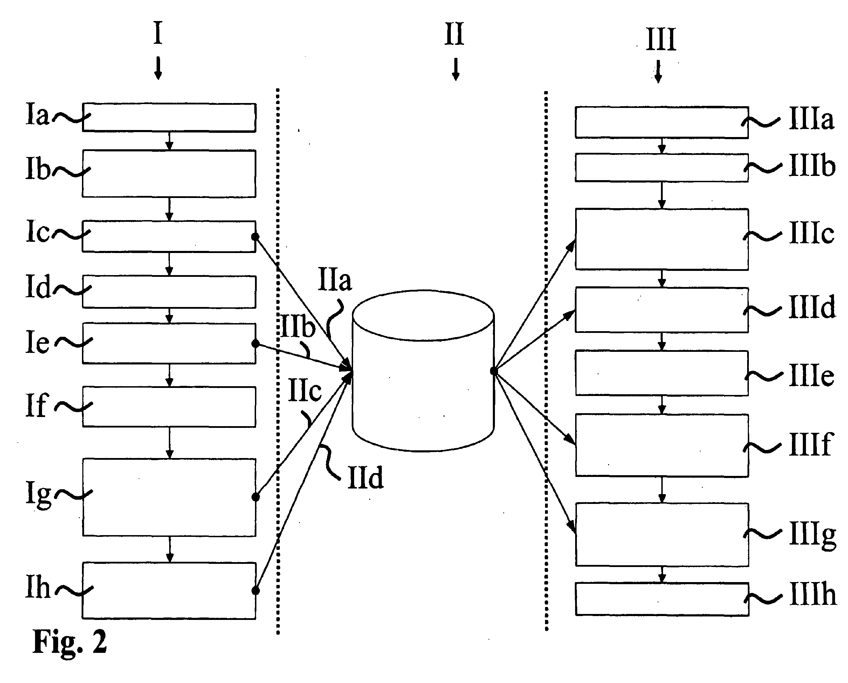

Figur 2 zeigt einen Verfahrensablauf zur Durchführung des besonders bevorzugten Prüfverfahrens. In Figur 2 sind dabei in der ganz linken Spalte I die Verfahrensschritte beim Einlernen eines Prüfvorgangs, d. h. eine Aufnahme eines Referenz-Prüfbilds und eine Festlegung von Prüfstrecken bzw. Prüfstreckenbereichen und ggf. Prüfzellenstrukturen anhand des Referenz-Prüfbilds, gezeigt. In der mittleren Spalte II ist dargestellt, welche bei dem Einlernvorgang gemäß Spalte I in den einzelnen Verfahrensschritten erzeugten bzw. gewonnenen Daten zur Verwendung in der späteren Prüfung gespeichert werden. In der ganz rechten Spalte III ist dann der eigentliche Prüfvorgang bei der Prüfung einer Kontur eines aktuellen Prüfobjekts dargestellt, wobei durch die Pfeile zwischen der Spalte II und der Spalte III dargestellt ist, wann welche Daten wieder aus dem Speicher ausgelesen werden.

Das Einlernverfahren beginnt zunächst im Verfahrensschritt Ia mit der Aufnahme eines Prüfbilds eines Referenz-Prüfobjekts. Es wird dann im Verfahrensschritt Ib der zu prüfende Bereich im Bild ausgewählt, d. h. es wird beispielsweise manuell von einem Benutzer mit einer geeigneten Benutzerschnittstelle ein Bereich im Referenz-Prüfbild gewählt, welcher die zu prüfende Kontur umfasst.

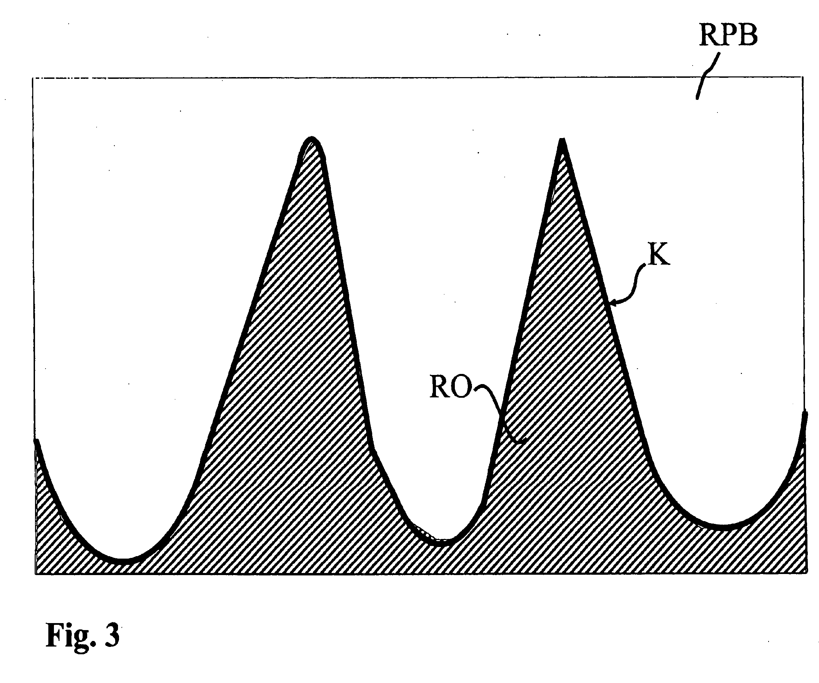

Im Verfahrensschritt Ic wird dann diese Kontur extrahiert. Dies ist in Figur 3 schematisch dargestellt. Gezeigt ist hier vergrößert in einem Referenzprüfbild RPB ein kleiner Ausschnitt eines sägezahnförmigen Referenz-Prüfobjekts RO, dessen Sägezahnkante genau geprüft werden soll. Dabei ist bereits eine extrahierte Kontur K, d. h. eine Pixelfolge, die die Konturdaten angibt, eingezeichnet. Die Extraktion einer solchen Kontur K kann mit den üblichen Verfahren, beispielsweise einem Schwellenwertverfahren, einem Kantenverfolgungsverfahren etc., durchgeführt werden. Eine Glättung oder Segmentierung des Bilds zur Extrahierung der Kontur kann beispielsweise unter Verwendung morphologischer Operatoren, wie den. sogenannten Opening- und Closing-Operatoren, Dilatations-, Erosions- und Skelettierungsoperatoren, erfolgen. Solche morphologischen Operatoren sind dem Fachmann aus der Bildverarbeitung allgemein bekannt. Die relevanten Daten der Kontur K, wie der Konturverlauf und die Position und Lage der Kontur K, werden im Verfahrensschritt IIa in einem Speicher hinterlegt.

Es wird an dieser Stelle darauf hingewiesen, dass im Folgenden das Verfahren anhand von einfachen Grauwertbildern dargestellt wird. Grundsätzlich ist es aber auch möglich, das Verfahren nicht nur für Grauwertbilder, sondern auch für Farbbilder zu verwenden, wobei es insbesondere auch möglich ist, eine Farbprüfung von Objekten durchzuführen.

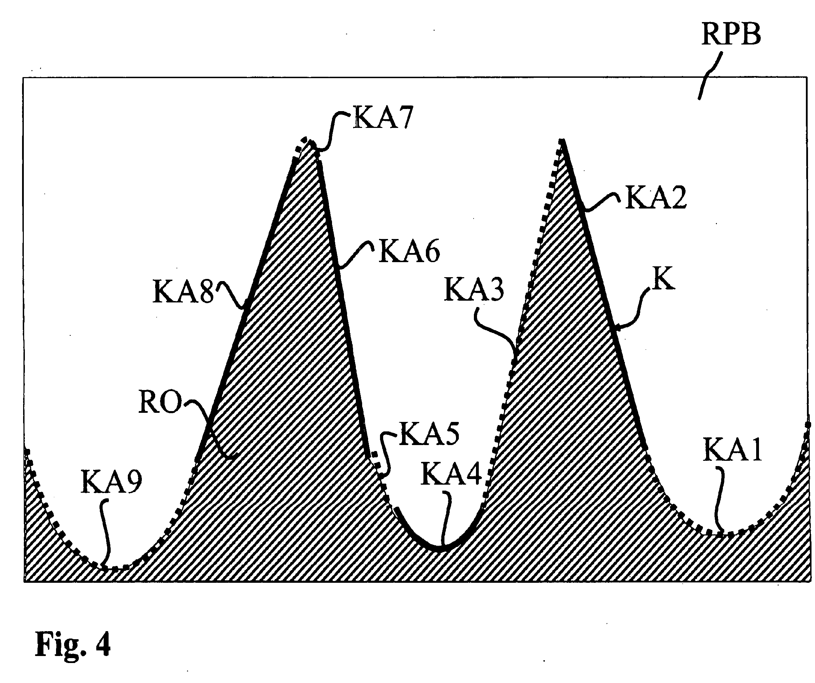

Die so ermittelte, sehr exakt an die Außenkanten des Objekts angepasste Kontur wird dann mit einem Polygonapproximations-Verfahren durch einen Polygonzug angenähert. Ein typisches Polygonapproximations-Verfahren, was sich hierfür eignet, ist der sog. Ramer-Algorithmus. Hierzu gibt es bereits fertige Programmmodule, die eine Kontur durch einen Polygonzug approximieren können, beispielsweise das von der Fa. MVtec. Solche Programme werden bisher für Radiusmessungen oder Abstandsmessungen eingesetzt. Dieses Verfahren führt aber zwangsläufig dazu, dass gerade bestimmte kritische Abschnitte der Kontur, beispielsweise die Spitzen der Sägezahnstruktur, nicht ganz exakt angepasst werden. Daher werden in einem weiteren Approximationsschritt einzelne Polygonabschnitte des Polygonzugs zur Bildung von Prüfstreckenabschnitten jeweils an einen dem betreffenden Polygonabschnitt zugeordneten Abschnitt der Kontur genauer approximiert: Dabei erfolgt die weitere Approximation unabhängig von den benachbarten Abschnitten (d. h. die Positionen der Enden des betreffenden Abschnitts werden nicht mehr festgehalten), wodurch die Kontur aufgebrochen wird. So kann es beispielsweise an einigen Stellen zu einem Versatz der Kurventeilstücke zueinander kommen. Figur 4 zeigt eine derart in Prüfstreckenabschnitte aufgebrochene Kontur mit mehreren Konturabschnitten KA1, KA2, KA3, KA4, KA5, KA6, KA7, KA8, KA9. Dabei ist beispielsweise zwischen dem Konturabschnitt KA5 und dem Konturabschnitt KA6 ein solcher Versatz zu erkennen. Solche Lücken zwischen den Konturabschnitten KA1, KA2, KA3, KA4, KA5, KA6, KA7, KA8, KA9 werden später ebenso wie bestimmte andere problematische Stellen in der Kontur K bei der Prüfung gesondert behandelt. Dies wird noch nachfolgend erläutert.

Dieses Aufbrechen der Kontur K in einfache geometrische Konturabschnitte wie Kreisbögen und -linien erfolgt im Verfahrensschritt le. Die geometrischen Konturabschnitte bzw. die zur Beschreibung dieser Objekte nötigen Forminformationen der Linien, Kreisbögen sowie ihre Position, Lage und Größe werden im Verfahrensschritt IIb in einem Speicher hinterlegt. In diesem Zusammenhang kann bereits eine erste Klassifizierungsregel angewandt werden, nach der einfache geometrischen Konturabschnitte, nämlich Geraden und nur leicht gekrümmte Kurvenabschnitte (oberhalb eines bestimmten Grenzradius) in eine erste Prüfstreckenbereichsklasse einsortiert werden können, für die die noch später erläuterte automatische Prüfung analog dem eingangs erwähnten herkömmlichen Scan-Verfahren durchgeführt werden kann.

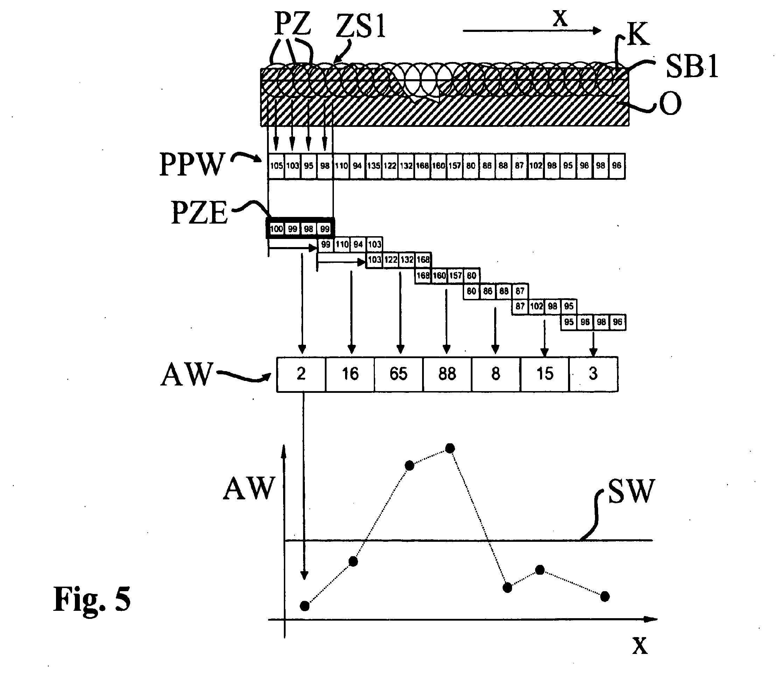

Im Verfahrensschritt If erfolgt eine gesonderte Prüfung, ob die Übergänge zwischen den einzelnen Konturabschnitten sprunghaft oder fließend sind. Wird ein solcher sprunghafter Übergang zwischen zwei Konturabschnitten festgestellt, werden die benachbarten Konturabschnitte im Verfahrensschritt Ig durch eine vorzugsweise gerade Linie zwischen den gegenüberliegenden Enden der Konturabschnitte zu einer Prüfstrecke vereint. Die Konturabschnitte und die ggf. eingefügten Verbindungslinien bilden dann die Prüfstreckenbereiche. Die gesamte Prüfstrecke umfasst also letztendlich die ermittelten Konturabschnitte KA1, KA2, KA3, KA4, KA5, KA6, KA7, KA8, KA9, welche jeweils einzelne Prüfstreckenabschnitte bilden können, und die eingefügten Verbindungslinien. In diesem Verfahrensschritt Ig erfolgt auch gleichzeitig eine Klassifizierung verschiedener Prüfstreckenbereiche in bestimmte Prüfstreckenbereichsklassen gemäß vorab festgelegten Klassifizierungsregeln. D. h. es werden beispielsweise sprunghafte Übergänge zwischen den einzelnen Prüfstreckenabschnitten bzw. Konturabschnitten als besonders zu prüfende Prüfstreckenbereiche klassifiziert, ebenso wie Prüfstreckenbereiche, welche andere besonders markante Stellen entlang der Prüfstrecke enthalten, z. B. wenn zwei Prüfstreckenabschnitte in einem spitzen Winkel aufeinander stoßen. Verschiedene mögliche Prüfstreckenbereichsklassen bzw. Typen von besonders markanten Prüfstreckenbereichen werden nachfolgend anhand der Figuren 5 bis 8c erläutert. Besonders gerade oder nur leicht gekrümmte Prüfstreckenabschnitte, d. h. die Prüfstreckenbereiche, welche durch die im Verfahrensschritt Ie ermittelten Konturabschnitte gebildet werden, wurden ja bereits in eine gesonderte Prüfstreckenbereichsklasse einsortiert, da diese keiner gesonderten Behandlung unterliegen müssen. Die im Verfahrensschritt 1g gewonnenen Daten über die komplette Prüfstrecke und die Klassifizierung der Prüfstreckenbereiche werden im Schritt IIc gespeichert.

Im Verfahrensschritt Ih werden dann für alle Prüfstreckenbereiche, welche in Prüfstreckenbereichsklassen fallen, die besonders markanten Übergängen zwischen Prüfstreckenabschnitten entsprechen bzw. selber besonders markante Prüfstellenabschnitte sind, gemäß bestimmten Prüfregeln mit einer Prüfzellenstruktur versehen und für diese ggf. schon bestimmte Referenzwerte RW für die spätere Prüfung anhand von Prüfparameterwerten der Prüfzelle ermittelt. Im Verfahrensschritt IId werden diese Referenzwerte RW ebenso wie Informationen über die Prüfzellenstruktur an den betreffenden markanten Übergängen hinterlegt. Zu den dort hinterlegten Daten zählt insbesondere auch die Zellengeometrie, zu deren Definition bei einer kreisrunden Zelle der Radius sowie die jeweilige Position des Mittelpunkts ausreichen.

Bei der späteren Prüfung (siehe Spalte III in Figur 2) wird zunächst im Verfahrensschritt IIIa ein Prüfbild PB aufgenommen. Auch hier wird ggf. der zu prüfende Bereich im Verfahrensschritt IIIb ausgewählt, wobei dies automatisch erfolgen kann. Im Schritt IIIc wird dann die gespeicherte Kontur mit einem automatischen Verfahren im Prüfbild PB gesucht und ihre Position, Lage und Größenabweichung im Verhältnis zu dem im Verfahrensschritt IIa im Speicher hinterlegten Kontur-Verlauf des Referenz-Prüfobjekts bestimmt. Die Positions-, Lage- und Größenabweichung können dann genutzt werden, um im Verfahrensschritt IIId aus dem Speicher die im Verfahrensschritt IIb hinterlegten einfachen geometrischen Prüfstreckenabschnitte bzw. die dort hinterlegten Forminformationen und Informationen über die Position, Lage und Größe dieser geometrischen Objekte zu nutzen und bezüglich ihrer Position, Lage und Größe an die Kontur im aktuellen Prüfbild anzupassen.

Im Verfahrensschritt IIIe können dann zunächst die durch die einzelnen einfachen geometrischen Prüfstreckenabschnitte gebildeten Prüfstreckenbereiche, welche in die erste Prüfstreckenbereichsklasse fallen, automatisch geprüft werden.

Eine solche automatische Prüfung wird anhand von Figur 5 erläutert, in der analog zu Figur 1 ein Teil eines Prüfobjekts O mit einer Kontur K dargestellt ist. Hierbei wird der Prüfstreckenabschnitt SB1 entlang der Kontur K in einer Scan-Richtung x mit Prüfzellen PZ belegt, welche sich jeweils um ein bestimmtes Maß überlappen. Dabei werden möglichst kreisrunde Prüfzellen PZ verwendet. Während der Prüfung wird also eine Prüfzellenstruktur ZS1 mit lauter äquidistanten, kreisförmigen Prüfzellen PZ entlang des Prüfstreckenbereichs SB aufgebaut. Für jede dieser Prüfzellen PZ wird dann ein mittlerer Grauwert als Prüfparameterwert PPW ermittelt. Bei einem mittleren Grauwert bzw. mittleren Intensitätswert handelt es sich einfach um den Mittelwert aller Intensitätswerte der einzelnen in die Prüfzelle PZ fallenden Bildpixel. Diese Ausgangs-Prüfparameterwerte PPW sind direkt in der Zeile unterhalb der Darstellung der Prüfzellenstruktur ZS1 in Figur 5 beispielhaft aufgeführt. Wie dort ebenfalls dargestellt ist, werden im vorliegenden Fall jeweils vier benachbarte Prüfzellen PZ zu Prüfzelleneinheiten PZE zusammengefasst, wobei sich zwei benachbarte Prüfzelleneinheiten PZE jeweils genau um eine Prüfzelle PZ überlappen, d. h. die Prüfzelleneinheiten PZG werden mit einem Vorschub von drei Prüfzellen PZ in Scan-Richtung x verschoben. Für jede Prüfzelleneinheit PZE wird dann ein maximaler mittlerer Intensitätsabweichungswert AW ermittelt, d. h. es wird die Differenz des maximalen Intensitätsmittelwerts PPW und des minimalen Intensitätsmittelwerts PPW der Prüfzellen PZ der jeweiligen Prüfzelleneinheit PZE ermittelt. Dies ergibt die Werte in der dritten Zeile. Diese Intensitätsabweichungswerte AW werden dann mit einem Schwellenwert SW verglichen, was in dem Diagramm unten in Figur 5 dargestellt ist. Liegt der Intensitätsabweichungswert AW einer Prüfzelleneinheit oberhalb des vorgegebenen Schwellenwerts, so wird dies als Fehler detektiert. Liegt der Intensitätsabweichungswert AW unterhalb des Schwellenwerts, so ist dieser Bereich der Kontur in Ordnung.

Die Größe der Prüfzellen PZ, die Anzahl der Prüfzellen PZ auf dem Prüfstreckenbereich SB1 bzw. die Dichte der Prüfzellen PZ und somit deren Überlapp, die Anzahl der Prüfzellen PZ innerhalb einer Prüfzelleneinheit PZE sowie der Prüfzellenvorschub und der Schwellenwert SW können u. a. als Prüfregeln beispielsweise von einem Bediener zuvor eingestellt und an die jeweilige Prüfaufgabe bzw. die gewünschte Empfindlichkeit der Fehlerprüfung angepasst werden.

Es ist hier zu bemerken, dass die endseitigen Prüfzellen PZ jeweils so gesetzt werden, dass ihre Kanten exakt auf dem Ende des Prüfstreckenbereichs SB1 liegen. Das heißt, dass bei einer automatischen Festlegung der Prüfstrecke solche Prüfstreckenbereiche SB1 auch direkt bis an eine Ecke des Objekts herangeführt werden können, ohne dass es dadurch zu falsch erkannten Fehlermeldungen kommt, dass Prüfzellen unbeabsichtigt in Scan-Richtung x seitlich über die Kontur K hinausragen.

Wie bereits eingangs erläutert, arbeitet ein solches Prüfverfahren sehr gut, wenn damit ein möglichst gerader oder leicht gebogener Prüfstreckenbereich abgefahren wird. Dieses Verfahren ist jedoch nicht so gut für Prüfstreckenbereiche mit besonders markanten Strukturen geeignet, welche deshalb hier bereits im Einlernvorgang in andere Prüfstreckenbereichsklassen einsortiert wurden. Für diese anderen Prüfstreckenbereiche wurden ja schon im Verfahrensschritt Ih extra separate Prüfzellenstrukturen ermittelt und im Verfahrensschritt IIc in einem Speicher hinterlegt. Diese Prüfzellenstrukturen werden nun im Verfahrensschritt IIIf wieder aus dem Speicher ausgelesen und an die entsprechenden markanten Prüfstreckenbereiche der Prüfstrecke im aktuell zu prüfenden Prüfbild angepasst, wobei die Position und Lage dieser einzelnen Prüfzellen, vorzugsweise aber nicht deren Größe, angepasst werden.

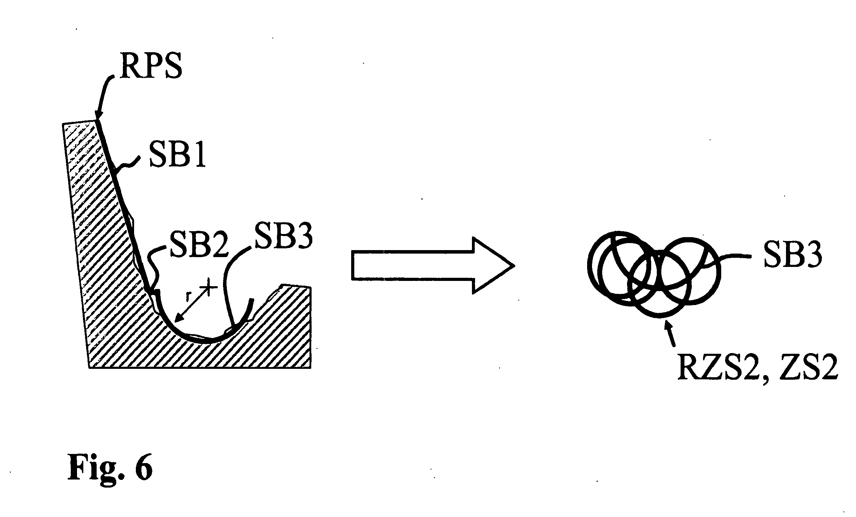

Anhand der Figuren 6 bis 9c werden nun beispielhaft bestimmte markante Konturen erläutert, die zu Prüfstreckenbereichen führen, die in bestimmte gesondert zu behandelnde Prüfstreckenbereichsklassen fallen.

Figur 6 zeigt dabei einen Fall, in dem ein Prüfstreckenabschnitt eine Krümmung mit einem Radius r unterhalb eines vorgegebenen Grenzradius aufweist. Ein solcher Prüfstreckenabschnitt ist als gesonderter Prüfstreckenbereich SB3 zu klassifizieren, da hier das anhand von Figur 5 erläuterte Verfahren nicht besonders gut zur Prüfung geeignet ist. Daher wird beispielsweise über diesen Prüfstreckenbereich SB3 manuell oder automatisch im Referenz-Prüfbild eine geeignete Prüfzellenstruktur ZS2 gelegt, wobei auch hier darauf geachtet wird, dass die äußersten Prüfzellen jeweils genau mit dem Prüfstreckenabschnitt bzw. Prüfstreckenbereich SB3 enden.

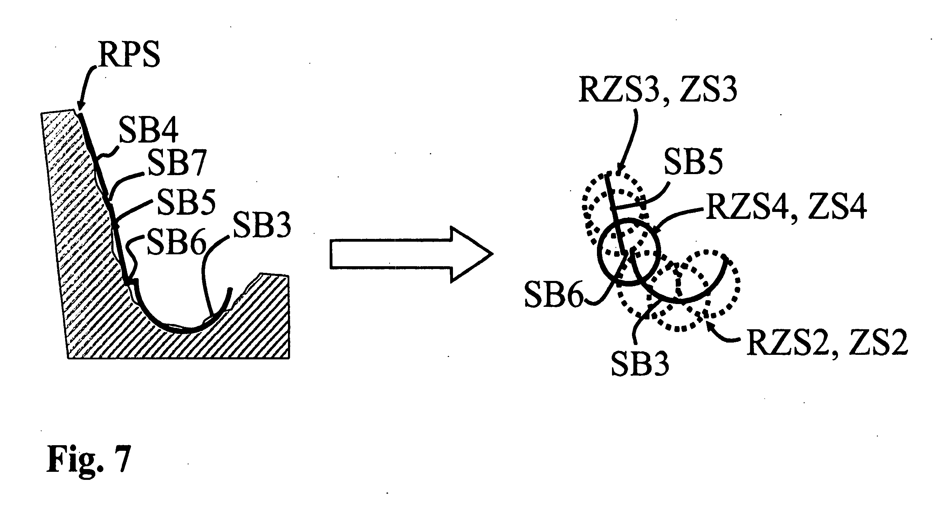

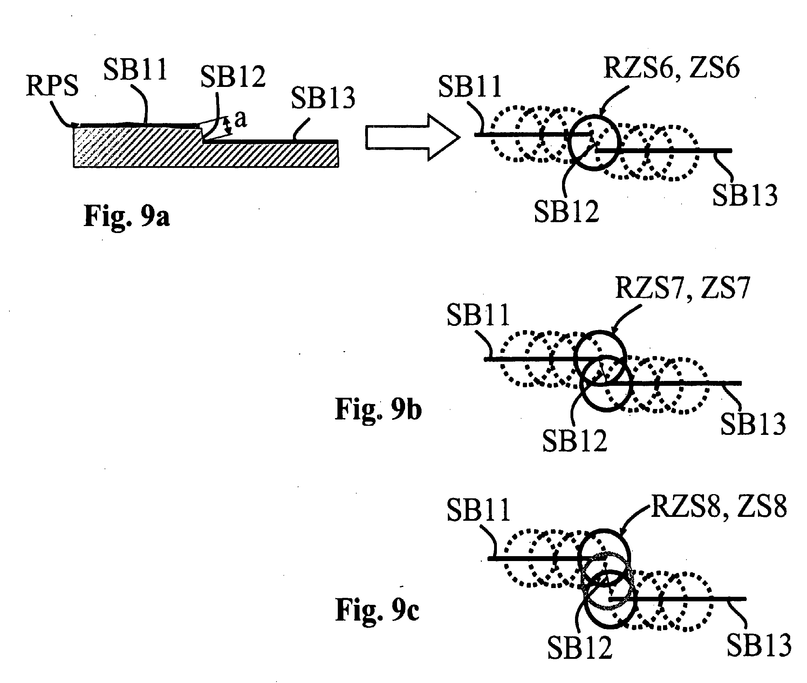

Figur 7 zeigt einen weiteren Fall, bei dem bestimmte Abschnitte der Prüfstrecke PS besonders kurz sind. Dies sind hier die Prüfstreckenabschnitte SB5 und SB3, die folglich aus diesem Grunde als besondere Prüfstreckenbereiche SB5, SB3 zu klassifizieren und gesondert zu behandeln sind. Die Klassifizierung kann gemäß der Klassifizierungsregeln daher so erfolgen, dass geprüft wird, ob ein Prüfstreckenabschnitt eine Länge aufweist, die unterhalb eines vorgegebenen Grenzwerts ist, beispielsweise eineinhalb Mal dem Durchmesser der Prüfzellen, wie sie an den nicht markanten Stellen eingesetzt werden sollen. Auch hier ist eine manuelle Vorgabe einzelner Prüfzellen innerhalb eines Referenz-Prüfbilds sinnvoll. Es ist zu beachten, dass Prüfstreckenbereich SB3 schon als Prüfstreckenbereich mit zu kleinem Radius gesondert zu behandeln ist. Dies Beispiel zeigt, dass ein Prüfstreckenbereich auch in verschiedenen Prüfstreckenbereichsklassen fallen könnte, wobei in den Prüfregeln festgelegt ist, nach welchen Prüfregeln für welche Prüfstreckenbereichsklasse eine weitere Behandlung dieses Prüfstreckenbereichs erfolgen sollte. Auf der rechten Seite von Figur 7 ist eine entsprechende Prüfzellenstruktur für einen solchen kurzen Prüfstreckenbereich SB5 dargestellt. Gezeigt ist hier auch noch einmal die Prüfzellenstruktur für den zu stark gekrümmten Prüfstreckenbereich SB3 sowie die Behandlung eines Übergangsbereichs SB6 zwischen den benachbarten Prüfzellenbereichen SB5 und SB3, der hier durch eine einzelne Prüfzelle, die sozusagen eine eigenständige Prüfzellenstruktur ZS4 bildet, dargestellt ist. Die Behandlung solcher Sprungübergänge wird aber noch nachfolgend anhand der Figuren 9a bis 9c genauer erläutert.

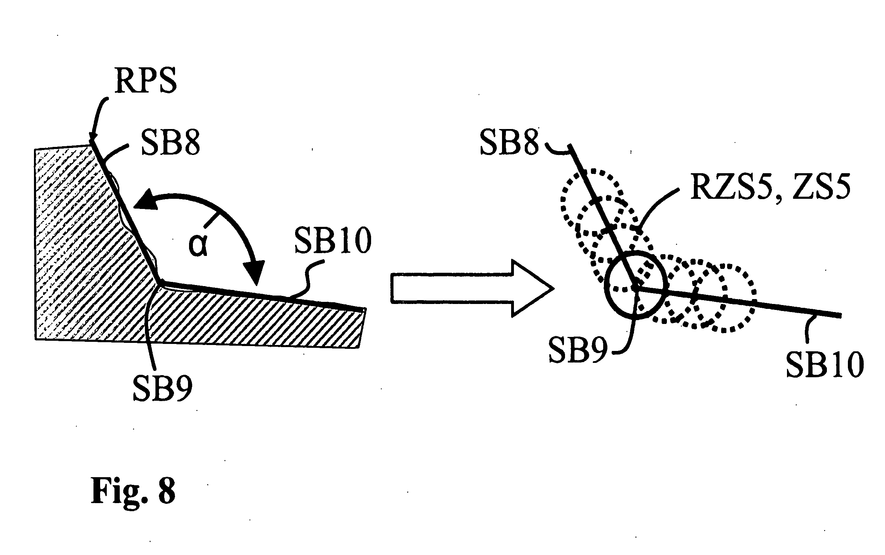

Figur 8 zeigt eine weitere Prüfstreckenbereichsklasse eines Übergangs zwischen zwei Prüfstreckenabschnitten SB8, SB10, die unter einem spitzen Winkel α aufeinander stoßen, der kleiner als ein vorgegebener Grenzwinkel ist. Das heißt, der Prüfstreckenbereich SB9 wird durch die Endbereiche der unter dem spitzen Winkel α aneinander stoßenden, durch gerade Prüfstreckenabschnitte gebildeten Prüfbereiche SB8, SB10 gebildet. Auch an solchen Ecken ist eine durchgehende Prüfung mit dem in Figur 5 erläuterten automatischen Verfahren in ausreichend guter Form nicht möglich. Daher wird hier vorzugsweise ebenfalls manuell oder automatisch eine Prüfzellenstruktur gemäß einer vorgegebenen Prüfregel definiert, die wiederum auf der rechten Seite von Figur 8 dargestellt ist. Gemäß der in dieser Prüfstreckenbereichsklasse festgelegten Prüfregel wird unmittelbar auf den Grenzpunkt eine Prüfzelle gelegt und weitere Prüfzellen laufen seitlich in die anderen Prüfbereiche SB8, SB10 hinein.

Die Figur 9a zeigt schließlich einen Fall für eine Prüfbereichsklasse, die durch Prüfbereiche gebildet wird, die einen Sprung zwischen zwei angrenzenden Prüfstreckenabschnitten umfassen. Hier sind dies die Prüfstreckenabschnitte SB11 und SB13, welche jeweils für sich einen Prüfbereich SB11, SB13 bilden. Der Abstand a zwischen den Enden dieser Prüfstreckenabschnitte ist größer als ein vorgegebener Grenzabstand. Daher muss dieser als gesonderter Prüfbereich SB12 klassifiziert werden. Auch hier wird gemäß einer bestimmten, vorher festgelegten Prüfregel eine Prüfzelle gesetzt, die diesen Abstand a überbrückt. Die Zelle wird hierbei so gelegt, dass ihr Mittelpunkt auf der Mitte der Linie liegt, die die Enden der Prüfstreckenbereiche SB11, SB13 verbindet. Zudem werden wieder weitere Prüfzellen gesetzt, die in die angrenzenden Prüfbereiche SB11, SB13 jeweils hineinlaufen. Eine solche Prüfzellenstruktur ZS6 ist auf der rechten Seite von Figur 9a dargestellt.

Die Figuren 9b und 9c zeigen Situationen, in denen der Abstand a noch größer ist. Figur 9b zeigt einen Fall, bei dem der Abstand a größer als ein weiter gesetzter zweiter Grenzabstand liegt. In diesem Fall werden zwei Zellen gesetzt, die jeweils ihren Mittelpunkt am Endpunkt der beiden mit Abstand voreinander liegenden Prüfabschnitte SB11, SB 13 haben, und es werden wiederum Zellen gesetzt, die in die angrenzenden Prüfbereiche SB11, SB13 hineinlaufen. Figur 9c zeigt schließlich einen Fall, bei dem der Abstand a einen noch weiter gefassten Grenzabstand überschreitet. In diesem Fall werden drei Prüfzellen gesetzt, eine mittig auf der Verbindungslinie zwischen den Enden der Prüfstreckenabschnitte SB11, SB13 und jeweils eine Zelle an den beiden Endpunkten der Prüfstreckenabschnitte SB11, SB13 sowie wie üblich weitere Prüfzellen, die in die Prüfstreckenabschnitte SB11, SB13 hineinlaufen.

Wie bereits erläutert, werden die gemäß den vorgegebenen Prüfregeln innerhalb des Referenz-Prüfbilds manuell oder automatisch gesetzten Prüfzellenstrukturen als Referenz-Prüfzellenstrukturen unmittelbar für die spätere Prüfung auch übernommen und lediglich hinsichtlich ihrer Position etwas an das aktuelle Prüfbild angepasst. Daher sind die in den Figuren 6 bis 9a dargestellten Referenz-Prüfzellenstrukturen RZS2, RZS3, RZS4, RZS5, RZS6, RZS7, RZS8 gleichzeitig auch die Prüfzellenstrukturen ZS2, ZS3, ZS4, ZS5, ZS6, ZS7, ZS8, so dass in den Figuren die Prüfzellenstrukturen jeweils mit entsprechenden doppelten Bezugsziffern versehen wurden.

Im Verfahrensschritt IIIg gemäß Figur 2 werden dann aus dem Speicher schließlich die Referenzwerte ermittelt, die im Verfahrensschritt IIc ebenfalls dort hinterlegt worden sind, und zur Prüfung markanter Prüfstreckenbereiche mit Hilfe der vom Referenz-Prüfbild übernommenen Prüfzellenstrukturen herangezogen. Auch hierfür können verschiedenste Prüfregeln genutzt werden. Beispielsweise können als Referenzwerte für jede einzelne Zelle ein mittlerer Intensitätswert sowie zusätzlich eine Differenz des mittleren Intensitätswerts zur jeweiligen Nachbarprüfzelle hinterlegt worden sein. Genau diese Werte werden dann auch bei der eigentlichen Prüfung für die einzelnen Prüfzellen ermittelt. Bei einer Auswertung im Rahmen der Prüfung kann dann ein Vergleich des mittleren Intensitätswerts jeder Prüfzelle mit dem eingelernten Referenzwert erfolgen. Ebenso ist aber auch ein Vergleich des mittleren Referenzwerts mit einem absoluten Schwellenwert für jede einzelne Prüfzelle möglich. Weiterhin ist auch ein Vergleich der mittleren Intensitätswerte zu den benachbarten Prüfzellen gegenüber entsprechenden Messwerten bzw. Differenzwerten eines eingelernten Referenzbildes möglich. Bei den genannten Prüfregeln handelt es sich lediglich um Beispiele, wobei auch eine Kombination der verschiedensten Prüfregeln angewandt werden kann. Letztlich sollte die genaue Festlegung der Prüfregel in Abhängigkeit von dem zu prüfenden Objekt bzw. der konkreten Kontur sowie den darin speziellen auftretenden markanten Stellen- bzw. Prüfbereichen und der gewünschten Empfindlichkeit der Prüfung erfolgen.

In einem Verfahrensschritt IIIh wird dann schließlich das Prüfergebnis ausgegeben, beispielsweise in Form eines optischen und/oder akustischen Warnsignals einem Bediener angezeigt und/oder es wird ein Steuersignal ausgegeben, um ein fehlerhaftes Prüfobjekt auszusortieren.

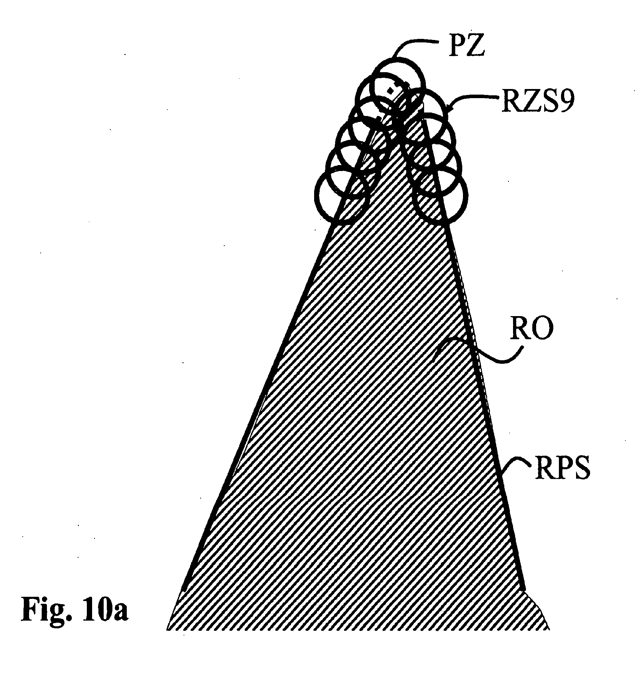

Anhand der Figuren 10a bis 10c wird noch einmal dargestellt, wie bestimmte Prüfstreckenbereiche einer Prüfstrecke PS gemäß unterschiedlichen Prüfregeln geprüft werden können. In Figur 10a ist dabei ein Abschnitt eines Sägezahns des in Figur 3 und 4 bereits dargestellten Prüfobjekts gezeigt. Die Kontur wurde in zwei gerade Konturabschnitte und einen die Spitze abbildenden, sehr stark gekrümmten Konturabschnitt aufgeteilt. Diese Spitze, welche den stark gekrümmten Konturabschnitt enthält, bildet einen Prüfbereich, welcher in eine gesonderte Prüfbereichsklasse einklassifiziert wird. Hier erfolgte während des Einlernvorgangs anhand eines Referenzprüfbilds beispielsweise eine manuelle Positionierung einer Referenz-Prüfzellenstruktur RZS9, wobei insbesondere an die Spitze genau eine Prüfzelle PZ gelegt wird und weitere Prüfzellen in die geraden Konturabschnitte hineinragen, so dass sie die an die Spitze angrenzenden Prüfstreckenbereiche der Referenz-Prüfstrecke RPS des Referenz-Prüfobjekts RO überlappen.

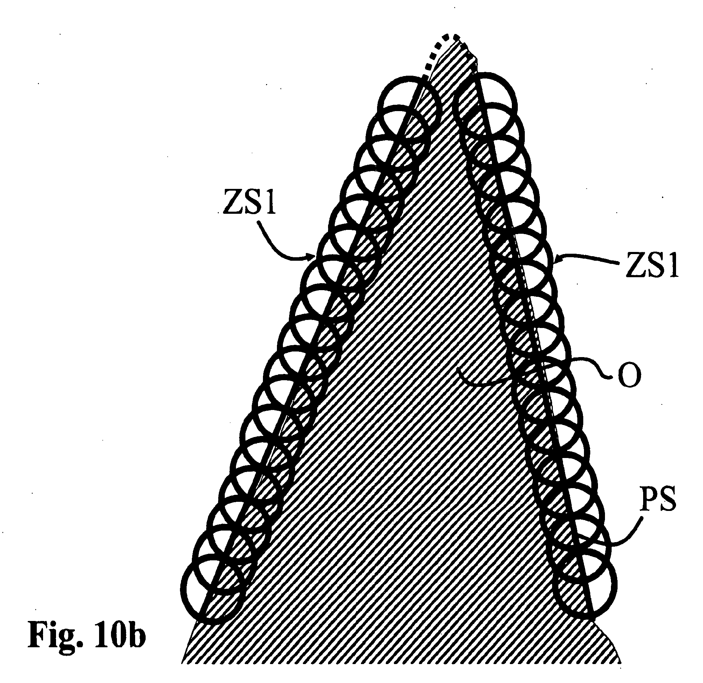

Figur 10b zeigt, wie die Prüfung am späteren Prüfobjekt O entlang dieser geraden Prüfstreckenbereiche mit Hilfe des Aufbaus einer einfachen automatischen Prüfzellenstruktur ZS1 erfolgt, wie sie bereits anhand von Figur 5 erläutert wurde.

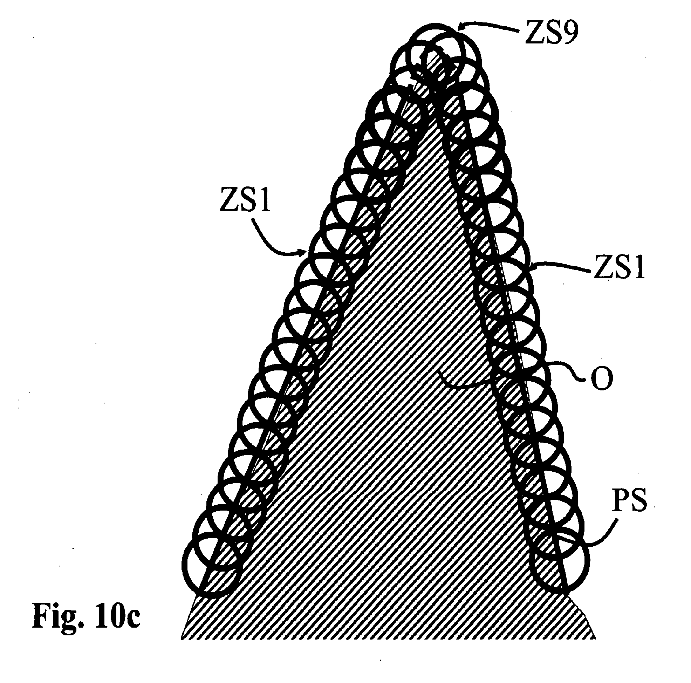

Figur 10c zeigt schließlich, wie nachfolgend im Prüfobjekt O eine Prüfung der im in Figur 10b dargestellten Verfahrensschritt bisher nicht geprüften Spitze erfolgt, indem die im in Figur 10a dargestellten Einlernschritt erstellte Referenz-Prüfzellenstruktur RZS9 übernommen und an die Spitze des Prüfobjekts O angepasst wird und mit Hilfe dieser Prüfzellenstruktur ZS9 dann die Prüfung der Spitze erfolgt. Durch den Überlapp der Prüfzellenstrukturen ZS9 sowie ZS1 ist dafür gesorgt, dass die gesamte Kontur der Sägezahnspitze geprüft ist.

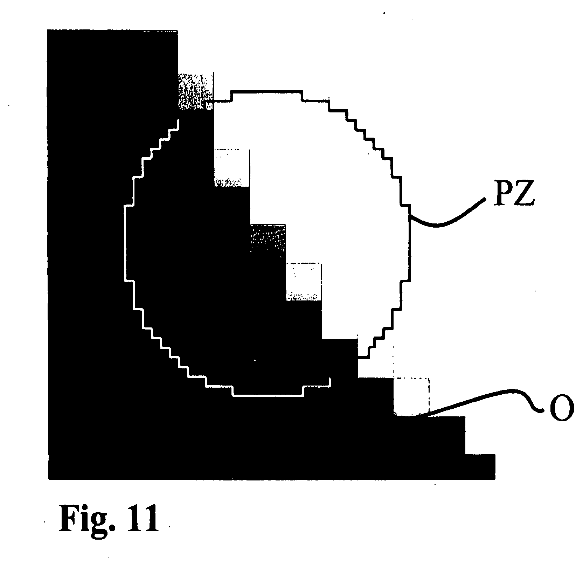

Wie bereits mehrfach erläutert, ist es besonders vorteilhaft, wenn die Prüfzellen so ausgebildet sind, dass sie möglichst gut eine Kreisform approximieren. Wie gut eine solche Annäherung an eine Kreisform erfolgen kann, hängt u. a. von der Bildauflösung ab. Besonders bevorzugt erfolgt daher ein Setzen der Prüfzellen im Sub-Pixelbereich. Hierzu wird das Ursprungsbild - wobei es sich je nachdem, ob die Prüfzelle im Referenz-Prüfbild oder im Prüfbild selbst gesetzt wird, um das Referenz-Prüfbild oder das Prüfbild handeln kann - zunächst vergrößert. Anschließend wird die Prüfzelle PZ eingepasst. In Figur 11 wird das Bild um einen Faktor 4 vergrößert, d. h. jeder Pixel wird durch ein Feld von 4 x 4 Pixel ersetzt, wobei die einzelnen Pixel dieses 4 x 4-Feldes jeweils den Intensitätswert des betreffenden Pixels im Ursprungsbild erhalten. Wie in Figur 11 gut zu sehen ist, kann der Kreis also so gesetzt werden, dass er auch mittig durch die Ursprungspixel verläuft. Dieses Verfahren hat den Vorteil, dass Randpixel mit niedrigem Rechenaufwand gut gewichtet werden können. Dadurch kann insbesondere auch die Prüfzelle selbst im Verhältnis zu der Kontur kleiner gemacht werden, da eine Fehlpositionierung um einen einzelnen Pixel nicht so viel Einfluss hat. Mit kleineren Zellen können aber wiederum feinere Fehler gefunden werden, so dass dieses Verfahren auch zur Verbesserung der Fehlererkennung beiträgt.

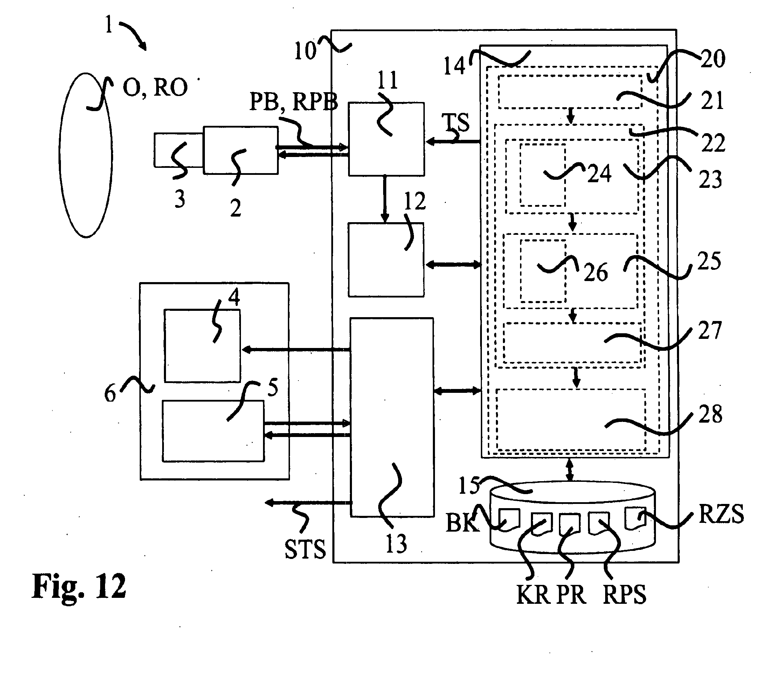

Anhand von Figur 12 wird nun noch schematisch ein möglicher Aufbau eines erfindungsgemäßen Prüfsystems erläutert.

Ein zentraler Bestandteil des Prüfsystems gemäß Figur 12 ist eine Rechnereinheit 10, an welche eine CCD-Kamera 2 als Bildsensoreinheit 2 mit einem Objektiv 3 angeschlossen ist. Während einer automatischen Prüfung von Konturen werden die Prüfobjekte O mit Hilfe einer geeigneten Positioniereinrichtung bzw. Transporteinrichtung (nicht dargestellt) an einer definierten Stelle im Aufnahmebereich der Kamera 2 positioniert. Beispielsweise kann die Kamera 2 direkt an oder über einem Transportband einer Produktionsstraße angeordnet sein. Bei einem Einlernen wird passend zur Kamera 2 ein Referenzobjekt RO positioniert und so ein Referenz-Prüfbild RPB aufgezeichnet.

Die Kamera 2 wird von einer Bildaufnahmeeinheit 11, beispielsweise einem sog. "Frame-Grabber" 11 angesteuert. Erhält dieser Frame-Grabber 11 von einem Steuerprogramm, welches auf einer CPU 14 der Rechnereinheit 10 abläuft, ein Triggersignal TS, so liest der Frame-Grabber 11 ein aktuell von der CCD-Kamera 2 erfasstes Prüfbild PB bzw. Referenz-Prüfbild RPB aus und hinterlegt dieses in einem Arbeitsspeicher 12 der Rechnereinheit 10. Die CPU 14 hat wiederum Zugriff auf diesen Arbeitsspeicher 12.

Weiter sind an die Rechnereinheit 2 über Ein-/Ausgabeschnittstellen, beispielsweise übliche COM-Schnittstellen, LPT-Schnittstellen, USB-Schnittstellen oder andere digitale Input- und/oder Output-Schnittstellen, welche hier als ein Schnittstellenblock 13 dargestellt sind, ein Monitor 4 und ein oder mehrere Eingabegeräte 5, beispielsweise eine Maus, ein Keyboard etc. angeschlossen, die gemeinsam eine Benutzerschnittstelle 6 mit einer graphischen Benutzeroberfläche bilden. Auch die Ein-/Ausgabeschnittstellen 13 sind mit der CPU 14 verbunden. Außerdem besitzt die Rechnereinheit 10 einen Permanentspeicher 15, beispielsweise einen Festplattenspeicher 15, auf welchen die CPU 14 ebenfalls Zugriff hat.

In Form von Softwaremodulen ist auf der CPU 14 u. a. ein Prüfmodul 20 installiert, welches verschiedene zum Aufbau des erfindungsgemäßen Prüfsystems benötigte Softwaremodule umfasst. Hierzu gehört ein Bildvorverarbeitungsmodul 21, welches beispielsweise dafür sorgt, dass mit Hilfe von bekannten Bildverarbeitungsalgorithmen im Prüfbild oder Referenz-Prüfbild eine Kontur extrahiert werden kann. Dieses Bildvorverarbeitungsmodul 21 kann auch über die Benutzerschnittstelle 6 angesteuert werden und es kann beispielsweise hiermit vom Bediener oder automatisch ein zu prüfender Bereich im Bild ausgewählt werden. In dem Bildvorverarbeitungsmodul 21 kann auch die Kontur bereits geglättet werden.

Die so ermittelte Kontur wird dann an das eigentliche Bildverarbeitungsmodul 22 übergeben. Dieses Bildverarbeitungsmodul 22 weist als Untereinheit zunächst eine Prüfstrecken-Ermittlungseinheit 23 auf, welche eine möglichst gut an die Kontur angepasste Prüfstrecke ermittelt. Teil dieser Prüfstrecken-Ermittlungseinheit 23 ist eine Prüfstrecken-Klassifizierungseinheit 24, welche beispielsweise bei einem Referenz-Prüfbild RFB die Prüfstrecke durch das bereits anhand von Figur 2 beschriebenen Verfahren im Einlernvorgang ermittelt und nach bestimmten Klassifizierungsregeln KR, die beispielsweise im Speicher 15 hinterlegt sind, einzelne Prüfstreckenbereiche in Prüfstreckenbereichsklassen BK klassifiziert bzw. einsortiert und entsprechend im Speicher 15 hinterlegt. Bei der eigentlichen Prüfung von Prüfobjekten O kann diese Prüfstrecken-Ermittlungseinheit 23 auch dazu dienen, eine bereits hinterlegte Referenz-Prüfstrecke RPS bzw. die durch die Referenz-Prüfstrecke RPS umfassten Prüfstreckenbereiche an eine Kontur des aktuellen Prüfbilds anzupassen.

Eine Prüfzellenermittlungseinheit 25 dient dann dazu, an die Prüfstrecke (bzw. im Einlernfall an die Referenz-Prüfstrecke) eine Prüfzellenstruktur gemäß der vorgegebenen Prüfregeln PR, welche ebenfalls im Speicher 15 hinterlegt sind, anzupassen. Diese Prüfzellenermittlungseinheit 25 kann beispielsweise auch über die Benutzerschnittstelle 6 angesteuert werden, um so manuell in bestimmten markanten Bereichen Prüfzellenstrukturen zu definieren. Im Übrigen ist diese Prüfzellenermittlungseinheit 25 aber auch in der Lage, gemäß den vorgegebenen Prüfregeln PR automatisch Prüfzellen zu definieren, insbesondere im Rahmen einer Prüfung von einfachen geraden Abschnitten gemäß den zuvor beschriebenen Prüfstreckenbereichen der ersten Prüfstreckenbereichsklasse. Diese Prüfzellenermittlungseinheit weist außerdem eine Prüfzellenstruktur-Übernahme- und -Anpassungseinheit 26 auf, um Referenz-Prüfzellenstrukturen RPS, welche im Einlernvorgang im Speicher 15 für ein bestimmtes Referenzobjekt hinterlegt worden sind, zu übernehmen und an ein aktuelles Prüfobjekt O bzw. die aktuell zu prüfende Kontur anzupassen. Eine Prüfeinheit 27 dient dann dazu, auf Basis der festgelegten Prüfzellenstrukturen die Kontur zu prüfen, wie dies zuvor bereits ausführlich erläutert wurde.

Eine Ausgabeeinheit 28 sorgt schließlich für eine Ausgabe des Prüfergebnisses, beispielsweise in der Form, dass der Benutzer über die Benutzerschnittstelle 6 durch Ausgabe eines akustischen und/oder optischen Signals gewarnt wird, wenn ein fehlerhaftes Prüfobjekt O detektiert wurde. Außerdem kann über die Eingabe- und Ausgabeschnittstellen 13 auch ein Steuersignal STS ausgegeben werden, welches beispielsweise eine Aussortiereinrichtung der (nicht dargestellten) Transporteinrichtung ansteuert, die ein fehlerhaft erkanntes Prüfobjekt aussortiert.

Es wird abschließend noch einmal darauf hingewiesen, dass es sich bei dem in den Figuren dargestellten System sowie den im Zusammenhang damit erläuterten konkreten Verfahren lediglich um Ausführungsbeispiele handelt, welche vom Fachmann in vielfacher Hinsicht variiert erden können, ohne den Rahmen der Erfindung zu verlassen wie er in den anhängenden Ansprüchen definiert ist. So ist beispielsweise die Anwendung der Erfindung nicht auf die Prüfung mittels Prüfbildern beschränkt, die mit Lichtwellen im sichtbaren Bereich aufgenommen wurden, sondern als Prüfbilder können auch andere Aufnahmen wie z. B. Infrarotaufnahmen, Röntgenaufnahmen etc. dienen. Es wird außerdem der Vollständigkeit halber darauf hingewiesen, dass die Verwendung der unbestimmten Artikel "ein" bzw. "eine" nicht ausschließt, dass die betreffenden Merkmale auch mehrfach vorhanden sein können. Die Begriffe "Einheit" und "Modul" schließen im Übrigen nicht aus, dass die jeweiligen Komponenten auch aus mehreren ggf. auch räumlich getrennten, zusammenwirkenden Teilkomponenten bestehen können.

## Patentansprüche

1. Verfahren zur optischen Prüfung einer Kontur (K) eines Prüfobjekts (O) mit folgenden Verfahrensschritten:
- Erfassung eines Prüfbilds (PB) zumindest von einem Prüfbereich eines zu prüfenden Prüfobjekts (O),
- Festlegung einer Prüfstrecke (PS) entlang der zu prüfenden Kontur (K) innerhalb des Prüfbilds (PB),
- Prüfung entlang der Prüfstrecke (PS) durch Abscannen der Kontur (K) entlang der Prüfstrecke (PS)
und Ermitteln von Prüfparameterwerten (PPW) für entlang der Prüfstrecke (PS) definierte Prüfzellen (PZ), welche jeweils eine Anzahl von Bildpunkten umfassen,
und Detektieren von Abweichungen von vorgegebenen Referenzwerten auf Basis der Prüfparameterwerte (PPW) der Prüfzellen (PZ),
wobei
die Prüfzellen (PZ) jeweils im Wesentlichen eine Kreisform oder eine einen Kreis annähernde konvexe Polygonform mit mindestens fünf Ecken aufweisen.

2. Verfahren nach Anspruch 1, **dadurch gekennzeichnet, dass** die Prüfparameterwerte (PPW) jeweils auf Basis der Intensitätsmittelwerte der Intensitätswerte der einzelnen Bildpunkte der jeweiligen Prüfzelle (PZ) ermittelt werden.

3. Verfahren nach Anspruch 1 oder 2, **dadurch gekennzeichnet, dass** zunächst in einem Referenz-Prüfbild (RPB) eine Referenz-Prüfstrecke (RPS) ermittelt wird, auf deren Basis eine Ermittlung einer Prüfstrecke (PS) innerhalb des Prüfbilds (PB) erfolgt.

4. Verfahren nach einem der Ansprüche 1 bis 3, **dadurch gekennzeichnet, dass** zur Definition von Prüfzellen (PZ) entlang einer Prüfstrecke (PS) oder Referenz-Prüfstrecke (RPS) das Prüfbild (PB) oder Referenz-Prüfbild (RPB) zunächst vergrößert wird und dabei jeder Bildpunkt durch ein Bildpunktfeld ersetzt wird.

5. Verfahren nach einem der vorhergehenden Ansprüche, **dadurch gekennzeichnet, dass** eine an einem Ende eines Prüfstreckenabschnitts (SB1) liegende Prüfzelle (PZ) so definiert wird, dass das betreffende Ende des Prüfstreckenabschnitts (SB1) auf einem Rand der Prüfzelle (PZ) liegt.

6. Verfahren nach einem der Ansprüche 1 bis 5, **dadurch gekennzeichnet, dass** die Prüfstrecke (PS) eine Anzahl von Prüfstreckenbereichen (SB1, SB2, SB3, SB4, SB5, SB6, SB7, SB8, SB9, SB10, SB11, SB12, SB13) umfasst, die jeweils in definierte Prüfstreckenbereichsklassen (BK) gemäß vorgegebenen Klassifizierungsregeln (KR) klassifiziert sind,
und dass gemäß für die jeweilige Prüfstreckenbereichsklasse (BK) vorgegebenen Prüfregeln (PR) entlang der Prüfstreckenbereiche (SB1, SB2, SB3, SB4, SB5, SB6, SB7, SB8, SB9, SB10, SB11, SB12, SB13) der Prüfstrecke (PS) jeweils eine aus einer Anzahl von Prüfzellen (PZ) bestehende Prüfzellenstruktur (ZS1, ZS2, ZS3, ZS4, ZS5, ZS6, ZS7, ZS8, ZS9) definiert und Prüfparameterwerte (PPW) für die einzelnen Prüfzellen (PZ) ermittelt werden,
und dass eine Prüfung des Prüfobjekts entlang der einzelnen Prüfstreckenbereiche (SB1, SB2, SB3, SB4, SB5, SB6, SB7, SB8, SB9, SB10, SB11, SB12, SB13) auf Basis der Prüfparameterwerte (PPW) der Prüfzellen (PZ) gemäß für die jeweilige Prüfstreckenbereichsklasse (BK) vorgegebenen Prüfregeln (PR) erfolgt.

7. Verfahren nach Anspruch 6, **dadurch gekennzeichnet,**
**dass** zunächst in einem Referenz-Prüfbild (RPB) entlang eines Prüfstreckenbereichs (SB1, SB2, SB3, SB4, SB5, SB6, SB7, SB8, SB9, SB10, SB11, SB12, SB13) der Referenz-Prüfstrecke (RPS) eine Referenz-Prüfzellenstruktur (RZS1, RZS2, RZS3, RZS4, RZS5, RZS6, RZS7, RZS8, RZS9) definiert wird und darauf basierend eine Definition einer Prüfzellenstruktur (ZS1, ZS2, ZS3, ZS4, ZS5, ZS6, ZS7, ZS8, ZS9) entlang eines Prüfstreckenbereichs (SB1, SB2, SB3, SB4, SB5, SB6, SB7, SB8, SB9, SB10, SB11, SB12, SB13) der Prüfstrecke (PS) eines aktuell zu prüfenden Prüfobjekts (O) erfolgt.

8. Verfahren nach Anspruch 7, **dadurch gekennzeichnet, dass** auf Basis von Prüfparameterwerten (PPW) von Prüfzellen (PZ) der Referenz-Prüfzellenstruktur (RZS1, RZS2, RZS3, RZS4, RZS5, RZS6, RZS7, RZS8, RZS9) Referenzwerte (RW) für eine spätere Prüfung eines Prüfobjekts (O) ermittelt werden.

9. Verfahren nach einem der Ansprüche 6 bis 8, **dadurch gekennzeichnet, dass** für Prüfstreckenbereiche (SB1, SB8, SB9, SB11, SB13) zumindest einer der Prüfbereichsklassen eine automatische Definition einer Prüfzellenstruktur (ZS1) gemäß einer ersten Prüfzellenstrukturierungsregel erfolgt
und für Prüfstreckenbereiche (SB2, SB3, SB4, SB5, SB6, SB7, SB10, SB12) zumindest einer anderen der Prüfbereichsklassen eine automatische und/oder manuelle Definition einer Prüfzellenstruktur (ZS2, ZS3, ZS4, ZS5, ZS6, ZS7, ZS8, ZS9) gemäß zumindest einer zweiten Prüfzellenstrukturierungsregel erfolgt.

10. Prüfsystem (1) zur optischen Prüfung einer Kontur (K) eines Prüfobjekts, mit
- einer Bildsensoreinheit (2) zur Erfassung eines Prüfbilds (PB, RPB) zumindest von einem Prüfbereich eines Prüfobjekts (O, RO),
- einer Prüfstreckenermittlungseinheit (23) zum Ermitteln einer Prüfstrecke (PS) entlang der zu prüfenden Kontur (K) innerhalb des Prüfbilds,
- einer Prüfzellenermittlungseinheit (25) zur Definition von jeweils eine Anzahl von Bildpunkten umfassenden Prüfzellen (PZ) entlang der Prüfstrecke (PS) für die Prüfung entlang der Prüfstrecke (PS) durch Abscannen der Kontur (K) und zum Ermitteln von Prüfparameterwerten (PPW) für die einzelnen Prüfzellen (PZ),
- einer Prüfeinheit (27) zur Prüfung entlang der Prüfstrecke (PS) durch Abscannen der Kontur (K) entlang der Prüfstrecke (PS) und zum Detektieren von Abweichungen von vorgegebenen Referenzwerten auf Basis der Prüfparameterwerte der Prüfzellen (PZ),
- einer Ausgabeeinheit (28) zur Ausgabe eines Prüfergebnisses, wobei die Prüfzellenermittlungseinheit (25) so ausgebildet ist, dass die Prüfzellen (PZ) jeweils im Wesentlichen eine Kreisform oder eine einen Kreis annähernde konvexe Polygonform mit mindestens fünf Ecken aufweisen.

11. Computerprogrammprodukt, welches direkt in einen Speicher einer programmierbaren Rechnereinheit (10) eines Prüfsystems (1) ladbar ist, mit Programmcode-Mitteln, um alle Schritte eines Verfahrens nach einem der Ansprüche 1 bis 9 auszuführen, wenn das Programm auf der Rechnereinheit (10) ausgeführt wird.

## Claims

1. Method for optically testing a contour (K) of a test object (O) with the following method steps:
- capturing a test image (PB) at least of a test region of a test object (O) to be tested,
- determining a test segment (PS) along the contour (K) to be tested within the test image (PB),
- testing along the test segment (PS) by scanning the contour (K) along the test segment (PS)
and determining test parameter values (PPW) for test cells (PZ) defined along the test segment (PS), each of which comprises a number of pixels,
and detecting deviations from predetermined reference values on the basis of the test parameter values (PPW) of the test cells (PZ),
wherein
the test cells (PZ) in each case essentially have a circular shape or a convex polygonal shape approximating a circle, with at least five corners.

2. Method according to claim 1, **characterised in that** the test parameter values (PPW) are in each case determined on the basis of the average intensity values of the intensity values of the individual pixels of the respective test cell (PZ).

3. Method according to claim 1 or 2, **characterised in that** initially a reference test segment (RPS) is determined in a reference test image (RPB), on the basis of which a determination of a test segment (PS) within the test image (PB) takes place.

4. Method according to one of claims 1 to 3, **characterised in that** for the definition of test cells (PZ) along a test segment (PS) or reference test segment (RPS), the test image (PB) or reference test image (RPB) is initially enlarged and whereby each pixel is replaced with a pixel field.

5. Method according to one of the preceding claims, **characterised in that** a test cell (PZ) located at one end of a test segment section (SB1) is defined in such a manner that the corresponding end of the test segment section (SB1) is located on an edge of the test cell (PZ).

6. Method according to one of claims 1 to 5, **characterised in that** the test segment (PS) comprises a number of test segment regions (SB1, SB2, SB3, SB4, SB5, SB6, SB7, SB8, SB9, SB10, SB11, SB12, SB13), which are each classified into defined test segment region classes (BK) in accordance with predetermined classification rules (KR),
and **in that** in accordance with the testing rules (PR) predetermined for the respective test segment region class (BK), along the test segment regions (SB1, SB2, SB3, SB4, SB5, SB6, SB7, SB8, SB9, SB10, SB11, SB12, SB13) of the test segment (PS) in each case one test cell structure (ZS1, ZS2, ZS3, ZS4, ZS5, ZS6, ZS7, ZS8, ZS9) consisting of a number of test cells (PZ) is defined and test parameter values (PPW) for the individual test cells (PZ) are determined,
and **in that** a test of the test object takes place along the individual test segment regions (SB1, SB2, SB3, SB4, SB5, SB6, SB7, SB8, SB9, SB10, SB11, SB12, SB13) on the basis of the test parameter values (PPW) of the test cells (PZ) in accordance with testing rules (PR) predetermined for the respective test segment region class (BK).

7. Method according to claim 6, **characterised**
**in that** initially in a reference test image (RPB) along a test segment region (SB1, SB2, SB3, SB4, SB5, SB6, SB7, SB8, SB9, SB10, SB11, SB12, SB13) of the reference test segment (RPS), a reference test cell structure (RZS1, RZS2, RZS3, RZS4, RZS5, RZS6, RZS7, RZS8, RZS9) is defined and, on the basis thereof, a definition takes place of a test cell structure (ZS1, ZS2, ZS3, ZS4, ZS5, ZS6, ZS7, ZS8, ZS9) along a test segment region (SB1, SB2, SB3, SB4, SB5, SB6, SB7, SB8, SB9, SB10, SB11, SB12, SB13) of the test segment (PS) of a test object (O) currently to be tested.

8. Method according to claim 7, **characterised in that** reference values (RW) for a later testing of a test object (O) are determined on the basis of test parameter values (PPW) of test cells (PZ) of the reference test cell structure (RZS1, RZS2, RZS3, RZS4, RZS5, RZS6, RZS7, RZS8, RZS9).

9. Method according to one of claims 6 to 8, **characterised in that** for test segment regions (SB1, SB8, SB9, SB11, SB13) of at least one of the test region classes, an automatic definition of a test cell structure (ZS1) takes place in accordance with a first test cell structuring rule and for test segment regions (SB2, SB3, SB4, SB5, SB6, SB7, SB10, SB12) of at least one other of the test region classes, an automatic and/or manual definition of a test cell structure (ZS2, ZS3, ZS4, ZS5, ZS6, ZS7, ZS8, ZS9) takes place in accordance with at least one second test cell structuring rule.

10. Testing system (1) for optically testing a contour (K) of a test object (O), with
- an image sensor unit (2), for capturing a test image (PB, RPB) of at least a test region of a test object (O, RO),
- a test segment identification unit (23), for determining a test segment (PS) along the contour (K) to be tested within the test image,
- a test-cell identification unit (25) for the definition of test cells (PZ), comprising a number of pixels in each case, along the test segment (PS) and for determining test parameter values (PPW) for the individual test cells (PZ),
- a test unit (27) for testing along the test segment (PS) by scanning the contour (K) along the test segment (PS) and for detecting deviations from predetermined reference values on the basis of the test parameter values of the test cells (PZ),
- an output device (28) for outputting a test result,
wherein the test-cell determination unit (25) is realised such that the test cells (PZ) essentially comprise a circular shape, or a convex polygonal shape approximating a circle with at least five corners.

11. Computer program product, which can be loaded directly into a memory unit of a programmable computer unit (10) of a test system (1), with program code means, in order to execute all steps of a method according to one of claims 1 to 9 when the program is executed on the computer unit (10).

## Revendications

1. Procédé pour le contrôle optique d'un contour (K) d'un objet de contrôle (O) avec les étapes suivantes du procédé :
- prise d'une image de contrôle (PB) d'au moins une zone de contrôle d'un objet de contrôle (O) à contrôler,
- établissement d'un segment de contrôle (PS) le long du contour (K) à contrôler à l'intérieur de l'image de contrôle (PB),
- contrôle le long du segment de contrôle (PS) par balayage du contour (K) le long du segment de contrôle (PS) et détermination de valeurs de paramètres de contrôle (PPW) pour des cellules de contrôle (PZ) définies le long du segment de contrôle (PS), lesquelles cellules comprennent respectivement un certain nombre de points d'image,
et détection de différences par rapport à des valeurs de référence prescrites sur la base de valeurs de paramètres de contrôle (PPW) des cellules de contrôle (PZ),
moyennant quoi
les cellules de contrôle (PZ) présentent respectivement sensiblement une forme circulaire ou une forme polygonale convexe proche d'un cercle avec au moins cinq angles.

2. Procédé selon la revendication 1, **caractérisé en ce que** les valeurs de paramètres de contrôle (PPW) sont respectivement déterminées sur la base des valeurs moyennes d'intensité des valeurs d'intensité des points d'image individuels de la cellule de contrôle (PZ) respective.

3. Procédé selon les revendications 1 ou 2, **caractérisé en ce que** l'on détermine tout d'abord un segment de contrôle de référence (RPS) dans une image de contrôle de référence (RPB), sur la base de laquelle on effectue une détermination d'un segment de contrôle (PS) à l'intérieur de l'image de contrôle (PB).

4. Procédé selon l'une des revendications 1 à 3, **caractérisé en ce que**, pour la définition de cellules de contrôle (PZ) le long d'un segment de contrôle (PS) ou d'un segment de contrôle de référence (RPS), on agrandit tout d'abord l'image de contrôle (PB) ou l'image de contrôle de référence (RPB) en remplaçant ce faisant chaque point d'image par un champ de point d'image.

5. Procédé selon l'une des revendications précédentes, **caractérisé en ce qu'**une cellule de contrôle (PZ) se situant à une extrémité d'une zone de segment de contrôle (SB1) est définie de manière à ce que l'extrémité en question de la zone de segment de contrôle (SB1) se situe sur un bord de la cellule de contrôle (PZ).

6. Procédé selon l'une des revendications 1 à 5, **caractérisé en ce que** le segment de contrôle (PS) comprend un certain nombre de zones de segment de contrôle (SB1, SB2, SB3, SB4, SB5, SB6, SB7, SB8, SB9, SB10, SB11, SB12, SB13), lesquelles sont respectivement classées en classes de zones de segment de contrôle (BK) définies selon des règles de classification (KR) prescrites, et **en ce que** l'on définit, conformément aux règles de contrôle (PR) prescrites pour la classe de zones de segment de contrôle (BK) respective le long des zones de segment de contrôle (SB1, SB2, SB3, SB4, SB5, SB6, SB7, SB8, SB9, SB10, SB11, SB12, SB13) du segment de contrôle (PS), respectivement une structure de cellules de contrôle (ZS1, ZS2, ZS3, ZS4, ZS5, ZS6, ZS7, ZS8, ZS9) se composant d'un certain nombre de cellules de contrôle (PZ), et des valeurs de paramètres de contrôle (PPW) étant déterminées pour les cellules de contrôle (PZ) individuelles, et **en ce qu'**un contrôle de l'objet de contrôle le long des zones de segment de contrôle (SB1, SB2, SB3, SB4, SB5, SB6, SB7, SB8, SB9, SB10, SB11, SB12, SB13) individuelles est effectué sur la base des valeurs de paramètres de contrôle (PPW) des cellules de contrôle (PZ) conformément à des règles de contrôle (PR) prescrites pour la classe de zones de segment de contrôle (BK) respective.

7. Procédé selon la revendication 6, **caractérisé en ce que** l'on définit tout d'abord, dans une image de contrôle de référence (RPB), le long d'une zone de segment de contrôle (SB1, SB2, SB3, SB4, SB5, SB6, SB7, SBB, SB9, SB10, SB11, SB12, SB13) du segment de contrôle de référence (RPS), une structure de cellules de contrôle de référence (RZS1, RZS2, RZS3, RZS4, RZS5, RZS6, RZS7, RZS8, RZS9) et sur les bases de celle-ci, une définition d'une structure de cellules de contrôle (ZS1, ZS2, ZS3, ZS4, ZS5, ZS6, ZS7, ZS8, ZS9) ayant lieu le long d'une zone de segment de contrôle (SB1, SB2, SB3, SB4, SB5, SB6, SB7, SB8, SB9, SB10, SB11, SB12, SB13) du segment de contrôle (PS) d'un objet de contrôle (O) à contrôler actuellement.

8. Procédé selon la revendication 7, **caractérisé en ce que** l'on détermine, sur la base de valeurs de paramètres de contrôle (PPW) de cellules de contrôle (PZ) de la structure de cellules de contrôle (RZS1, RZS2, RZS3, RZS4, RZS5, RZS6, RZS7, RZS8, RZS9), des valeurs de référence (RW) pour un contrôle ultérieur d'un objet de contrôle (O).

9. Procédé selon l'une des revendications 6 à 8, **caractérisé en ce que**, pour des zones de segment de contrôle (SB1, SB8, SB9, SB11, SB13) d'au moins l'une de classes de zones de contrôle, on effectue une définition automatique d'une structure de cellules de contrôle (ZS1) conformément à une première règle de structuration de cellules de contrôle
et **en ce que**, pour des zones de segment de contrôle (SB2, SB3, SB4, SB5, SB6, SB7, SB10, SB12) d'au moins une autre des classes de zones de contrôle, on effectue une définition automatique et/ou manuelle d'une structure de cellules de contrôle (ZS2, ZS3, ZS4, ZS5, ZS6, ZS7, ZS8, ZS9) conformément à au moins une deuxième règle de structuration de cellules de contrôle.

10. Système de contrôle (1) pour le contrôle optique d'un contour (K) d'un objet de contrôle (O), avec
- une unité de capteur d'image (2) pour la prise d'une image de contrôle (PB, RPB) d'au moins une zone de contrôle d'un objet de contrôle (O, RO),
- une unité de détermination de segment de contrôle (23) pour déterminer un segment de contrôle (PS) le long du contour (K) à contrôler à l'intérieur de l'image de contrôle,
- une unité de détermination de cellules de contrôle (25) pour la définition de cellules de contrôle (PZ) comprenant respectivement un certain nombre de points d'image le long du segment de contrôle (PS) et pour la détermination de valeurs de paramètres de contrôle (PPW) pour les cellules de contrôle (PZ) individuelles,
- une unité de contrôle (27) pour le contrôle le long du segment de contrôle (PS) grâce à un balayage du contour (K) le long du segment de contrôle (PS) et pour la détection de différences par rapport à des valeurs de référence prescrites sur la base des valeurs de paramètres de contrôle des cellules de contrôle (PZ),
- une unité de sortie (28) pour la sortie du résultat de contrôle,
l'unité de détermination de cellules de contrôle (25) étant réalisée de manière à ce que les cellules de contrôle (PZ) présentent respectivement sensiblement une forme circulaire ou une forme polygonale convexe proche d'un cercle avec au moins cinq angles.

11. Produit de programme informatique, lequel peut être directement chargé dans une mémoire d'une unité de informatique (10) programmable d'un système de contrôle (1), avec des moyens de codes de programme afin d'exécuter toutes les étapes d'un procédé selon l'une des revendications 1 à 9 lorsque le programme est exécuté sur l'unité de informatique (10).
